# NEW EUROPEAN PATENT SPECIFICATION

(11) **EP 0 643 734 B2**
(45) Date of publication and mention of the opposition decision: **06.02.2002**
(45) Mention of the grant of the patent: 15.07.1998
(21) Application number: 93912768.4
(22) Date of filing: 24.05.1993
(51) Int. Cl.: C08G 18/42, C08G 18/08, C08G 18/12, C09D 175/06, C08F 283/00

(54) **AQUEOUS POLYURETHANE DISPERSIONS**
WÄSSRIGE POLYURETHAN-DISPERSIONEN
DISPERSIONS AQUEUSES DE POLYURETHANNE

(30) Priority: 04.06.1992 GB 9211794
(43) Date of publication of application: 22.03.1995
(73) Proprietor: Avecia B.V., 5140 AC Waalwijk (NL); Avecia Inc., Wilmington, DE 19850-5457 (US)
(72) Inventor: PEARS, David, Alan, Cheshire, CH3 6BJ (GB); OVERBEEK, Gerardus, Cornelis, NL-5144 EG Waalwijk (NL); SMAK, Yvonne, Wilhelmina, NL-3432 RN Nieuwegein (NL); GOOS, Hendricus, Cornelis, NL-4849 AN Dorst (NL); JANSSE, Petrus, Leonardus, NL-5151 JP Drunen (NL); COOGAN, Richard, George, North Reading, MA 01864 (US)
(74) Representative: Sheller, Alan
(86) International application number: EP9301294
(87) International publication number: WO9324551

(56) References cited:
- EP-A- 0 297 576
- EP-A- 0 299 148
- EP-A- 0 427 028
- WO-A-91/12988
- WO-A-91/14514
- FR-A- 2 087 669
- FR-A- 2 224 514
- US-A- 4 423 179
- US-A- 4 791 168
- US-A- 5 141 987

## Description

The present invention relates to aqueous dispersions and more particularly to aqueous polyurethane dispersions in which the polyurethane comprises dimer acid and certain low molecular weight cycloaliphatic components.

Aqueous polyurethane dispersions which are used as or provide the basis of aqueous-based coating compositions are well known for the production of coating films on various substrates. They may be used for the provision of e.g. protective or decorative coatings since polyurethanes, depending on their particular composition, can possess many desirable properties such as good chemical resistance, water-resistance, solvent resistance, toughness, abrasion-resistance, substrate adhesion and durability. Dispersion of the polyurethane in the aqueous system has been achieved either by the use of external surfactants or, more usefully, by including appropriate chain-pendant ionic and/or nonionic groups in the structure of the polyurethane polymer. In the latter respect, such aqueous polyurethane dispersions are particularly advantageously prepared (as is by now well-known in the art) by dispersing an isocyanate-terminated polyurethane prepolymer bearing ionic and/or nonionic dispersing groups into an aqueous medium and then reacting the prepolymer with an active hydrogen-containing chain extender while dispersed in the aqueous medium. See e.g. UK Patents 1549458 and 1549459.

It is known to obtain particularly high performance aqueous polyurethane dispersions, especially in terms of the chemical, water, solvent and stain-resistance of coatings derived therefrom, by employing a polycarbonate polyol as a reactant in the prepolymer formation along with the other components used in the prepolymer synthesis, particularly always including an organic polyisocyanate. However, polycarbonate polyols tend to be very expensive materials. Moreover, in our experience their future supply cannot always be guaranteed. In view of this we have sought high performance alternatives to polycarbonate polyol-based polyurethane aqueous dispersions.

We have now discovered novel aqueous polyurethane dispersions of exceptionally high performance which do not owe their good properties to the presence of a polycarbonate polyol component in the polyurethane.

According to the present invention there is provided an aqueous polyurethane polymer(s) dispersion wherein the polyurethane polymer(s) thereof comprises the reaction product of:
(A) an isocyanate-terminated polyurethane prepolymer in the form of an aqueous dispersion thereof, said prepolymer being formed from reactants which comprise:
   (i) at least one organic polyisocyanate,
   (ii) at least one polyesterpolyol which has been derived at least in part from a dimer acid,
   (iii) at least one isocyanate-reactive and/or diisocyanate compound providing nonionic and/or ionic dispersing groups or groups which are subsequently converted to such dispersing groups, and wherein
   (iv) said prepolymer also incorporates polymerised units of one or both of at least one cycloaliphatic polyol of molecular weight below 400 and at least one cycloaliphatic polyacid of molecular weight below 400, with the proviso that any such cycloaliphatic polyol(s) is incorporated by being used as a reactant in the synthesis of the at least one polyesterpolyol and/or by being used as such (i.e. as a separate component(s)) in the prepolymer synthesis, and that any cycloaliphatic polyacid (s) is incorporated only or substantially only by being used as a reactant in the synthesis of the at least one polyesterpolyol, and
(B) an active hydrogen chain-extending compound (s) selected from a primary or secondary aliphatic, alicyclic, atomatic, araliphatic or heterocyclic diamine or polyamine, or hydrazine or a substituted hydrazine, and which is used in an amount such that the ratio of active hydrogen atoms in the chain-extending compound(s) to isocyanate groups in the isocyanate-terminated prepolymer is in the range of from 0.8:1 to 1.7:1.

There is also provided according to the invention a process for the preparation of an aqueous polyurethane polymer dispersion which process comprises:
I. synthesising an isocyanate-terminated polyurethane prepolymer from reactants which comprise:
   (i) at least one organic polyisocyanate,
   (ii) at least one polyesterpolyol which incorporates polymerised units derived from a dimer acid,
   (iii) at least one isocyanate-reactive and/or diisocyanate compound providing nonionic and/or ionic dispersing groups or groups which are subsequently converted to such dispersing groups, and wherein
   (iv) said prepolymer also incorporates polymerised units of one or both of at least one cycloaliphatic polyol of molecular weight below 400 and at least one cycloaliphatic polyacid of molecular weight below 400 with the proviso that any such cycloaliphatic polyol(s) is incorporated by being used as a reactant in the synthesis of the at least one polyesterpolyol and/or by being used as such (i.e. as a separate component(s)) in the prepolymer synthesis, and that any cycloaliphatic polyacid (s) is incorporated only or substantially only by being used as a reactant in the synthesis of the at least one polyesterpolyol,
II. forming an aqueous dispersion of said prepolymer having converted to dispersing groups any groups requiring such conversion, and
III. chain-extending the prepolymer, in the aqueous medium, to form said polyurethane polymer dispersion using an active hydrogen chain-extending compound(s) selected from a primary a secondary aliphatic, aromatic, araliphatic or heterocyclic diamine or polyamine, or hydrazine or a substituted hydrazine which is used in an amount such that the ratio of active hydrogen atoms in the chain-extending compound(s) to isocyanate groups in the isocyanate-terminated prepolymer is in the range of from 0.8:1 to 1.7:1.

There is further provided according to the invention a coating obtainable or derived from an aqueous-based composition comprising an aqueous polyurethane polymer dispersion as defined above.

There is still further provided according to the invention a method of coating a substrate using an aqueous-based composition comprising an aqueous polyurethane polymer dispersion as defined above.

There is still further provided according to the invention a coated substrate having a coating obtainable or derived from an aqueous-based composition comprising an aqueous polyurethane polymer dispersion as define above.

The aqueous polyurethane dispersion of the invention may of course comprise more than one polyurethane polymer prepared as defined above.

For the purposes of this invention an "aqueous dispersion" means a dispersion of the polyurethane polymer in a liquid carrier medium of which water is the principle component (at least 50 weight %, more usually at least 80 weight %, of the carrier medium). Minor amounts of organic liquids may optionally be present. The dispersion will typically comprise colloidally dispersed particles of the polyurethane, i.e. will typically be in the form of an aqueous latex.

It has thus been discovered that aqueous polyurethane polymer dispersions as defined above, i.e. in which the prepolymer used in the synthesis thereof is derived from a polyester polyol incorporating polymerised dimer acid units and the prepolymer also incorporating polymerised units of low molecular weight cycloaliphatic polyols and/or diacids (as defined) in a manner also as defined above, unexpectedly possess an exceptionally advantageous combination of good properties, in particular excellent chemical, water, solvent, and stain-resistance, and can therefore be considered as high performance products.

Polyester polyols as used herein preferably contain an average of 1.5 to 3 hyroxyl groups per molecule, preferably 1.8 to 2.3 hydroxyl groups per molecule, and particularly 1.9 to 2.1 groups per molecule (i.e. about 2 groups per molecule). The hydroxyl groups are usually terminally located (i.e. at the end of a polymer chain) but can be non-terminal as well. The polyester structure may be linear or it may be branched. As is well known, polyesters, which contain carbonyloxy linking groups (i.e. ester groups of formula -C(=O)-O-) are made by polymerising an "acid component", by which we mean a component consisting of reactant(s) based substantially on at least one multifunctional carboxylic acid (usually mostly or all dicarboxylic), or ester-forming derivatives thereof such as acid halides, anhydrides or esters (polymerisation taking place by transesterification in the latter case) and a "hydroxyl-component", by which we mean a component consisting of reactant(s) based substantially on at least one polyol (usually including at least one diol). (It is to be understood however, that the polyester may contain if desired small amounts of carbonylamido linking groups -C(=O)-NH- by including a minor amount of an appropriate amino functional reactant as part of the "hydroxyl-component"; however this is not usual).

The polyester polyols used in the instant invention have an acid component which comprises at least one dimer acid.

Dimer acids (and esters thereof) are a well known commercially available class of (usually unsaturated) dicarboxylic acids (or esters). They are normally prepared by dimerising unsaturated long chain aliphatic monocarboxylic acids, usually of 13 to 22 carbon atoms, or their esters (e.g. alkyl esters). The dimerisation is thought by those in the art (although we should not be bound by this) to proceed by possible mechanisms which includes Diels Alder, free radical, and carbonium ion mechanisms: The dimer acid material will normally comprise a mixture of isomers which will usually contain 26 to 44 carbon atoms. Particularly, examples include dimer acids (or esters) derived from C-18 and C-22 unsaturated monocarboxylic acids (or esters) which will yield, respectively, C-36 and C-44 dimer acids (or esters). Dimer acids derived from C-18 unsaturated acids, which include acids such as linoleic and linolenic are particularly well known (yielding C-36 dimer acids). For example 9, 11 and 9, 12 linoleic acids can dimerise to an isomer mixture having structures selected from one or more of linear, acyclic and aromatic structures. The dimer acid products will normally also contain a proportion of trimer acids (e.g. C-54 acids when using C-18 starting acids), possibly even higher oligomers and also small amounts of the monomer acids.

The dimer acids preferred in this invention are the high purity (polymer grade) materials. Such dimer acids contain both low levels of monobasic, and other monofunctional intermediates, and low levels of trimer acid. The low level of monofunctional components facilitates the subsequent production of high molecular weight polymers. The low level of trimer content minimises any branching which might possibly lead to a viscosity increase or a risk of gelation (crosslinking) in subsequent steps. Preferred dimer acids are those with less than 3 weight % of trimer or higher oligomer Usually, dimer acid (or ester) products as initially formed are unsaturated which could possibly be detrimental to their oxidative stability by providing sites for crosslinking or degradation, and so resulting in changes in the physical properties of the resulting coatings with time. It is therefore preferred (although not essential) to use dimer acid products which have been hydrogenated to remove a substantial proportion of unreacted double bonds. Thus, the dimer acids preferred in this invention have a high degree of hydrogenation giving low levels of unsaturation. The iodine value is preferably below 10 g I₂/100 g for the dimer acid component. Several different grades of high purity dimer acids are available from commercial sources, for examples PRIPOL 1009 is a C-36 type available from Unichema International (PRIPOL is a trademark of Unichema).

Hereinafter the term "dimer acid" (unless there are indications to the contrary) is used for convenience to collectively convey both the diacid material itself, or ester-forming derivatives thereof (such as lower alkyl esters) and includes (if present) any trimer or monomer.

In the synthesis of the polyester polyol, the acid component used therefor can consist solely of dimer acid, i.e. the dimer acid can be the only diacid. Alternatively, the dimer acid may be used in conjunction with any of the diacids or higher functionality acids which are suitable for incorporation into the polyester structure. Suitable acids for this purpose include C-4 to C-20 aliphatic, cycloaliphatic and aromatic dicarboxylic acids (or higher functionality acids) or their ester-forming derivatives (such as anhydrides or lower alkyl esters). Specific examples include adipic acid, fumaric acid, maleic acid, succinic acid, itaconic acid, sebacic acid, 1,4-cyclohexanedicarboxylic acid, 1,3-cyclohexanedicarboxylic acid, 1,2-cyclohexanedicarboxylic acid, terephthalic acid, isophthalic acid, phthalic acid, and tetrahydrophthalic acid. Anhydrides include succinic, maleic and phthalic anhydrides.

It will be noted that cycloaliphatic dicarboxylic acids of molecular weight below 400 are given above as examples of polyacids which may be used in conjunction with the dimer acid as the acid component, and of course if low molecular weight cycloaliphatic polyacid is in fact incorporated into the polyurethane structure, it will (as defined above) necessarily be incorporated only or substantially only in this way (i.e by being used only or substantially only as a reactant in the synthesis of the polyester polyol). This is because incorporation of such cycloaliphatic polyacid by using it as such (i.e. as a separate component) in the prepolymer synthesis in our experience generates unacceptable foaming. However it might be used to a very small degree (say up to 1 or 2 wt% in total, based on the weight of prepolymer reactants) without any problems; hence the use of the term "substantially only". Other (non cycloaliphatic) polyacids which may be used particularly include adipic acid.

With regard to the hydroxyl-component reactants used in the polyester polyol synthesis, these can be any one or more of the diols (glycols) suitable for incorporation into the polyurethane structure and may be aliphatic, cycloaliphatic, aryl or aralkyl glycols; small amounts of higher functionality alcohols may also be used if desired (e.g. tri-or tetrafunctional alcohols). Examples of these include 1,6-hexane diol, ethylene or propylene glycol, 1,3-butanediol,1,4-butanediol, neopentyl glycol, trimethyl pentane diol, the 1,2-, 1,3-, and 1,4-cyclohexanediols and the corresponding cyclohexane dimethanols, diethylene glycol, dipropylene glycol, glycerol, trimethylol propane, and pentaerythritol. Diols such as alkoxylated bisphenol A products (which are here intended to be included within the term aralkyl glycols), e.g. ethoxylated or propoxylated bisphenol A (usually of molecular weight below 500)could also be used.

It will again be noted that cycloaliphatic polyols of molecular weight below 400 are given above as examples of polyols which may be used as at least part of the hydroxyl component employed in the polyester polyol synthesis, and of course if low molecular weight cycloaliphatic polyols is in fact incorporated into the polyurethane structure, it can (as defined) be incorporated in this way (i.e. by being used as a reactant in the synthesis of the polyester polyol) and/or by being used as such (i. e. as a separate component) in the polyurethane prepolymer synthesis. Other polyols which may be used in the synthesis of the polyester polyol particularly include neopentyl glycol and trimethyl pentane diol.

The relative levels of the acid-component reactants and hydroxyl-component reactants should be such, as mentioned supra, that the resulting polyester polyol is hydroxyl-terminated. Therefore a suitable stoichiometric excess of hydroxyl-components will be employed. Generally speaking the reactants are usually used in proportions such that the ratio of hydroxyl-component hydroxyl groups to acid-component carboxyl groups is from about 1.05:1 to about 1.5: 1 (more usually 1.3:1 to 1.1:1).

Usually, the hydroxyl number of the polyester polyol will be within the range of from 30 to 210 (more usually 40 to 150) mg KOH/g, and its acid value will usually be within the range of 0 to 20 (more usually 0.05 to 2) mg KOH/g. The number average molecular weight of the polyester polyol will often be within the range of from 500 to 5000, more usually from 700 to 3000.

The level of dimer acid - derived units in the polyester polyol on a weight % basis will often be within the range of 25 to 75 weight % (often 30 to 70 weight %). The level of units derived from one or more of said low molecular weight cycloaliphatic polyol, cycloaliphatic polyacid in the polyester on a weight % basis will usually be within the range of from 0 to 55 weight %, and the level of other polyacid and/or polyol components will usually be within the range of from 0 to 75 weight %.

The level of polyester polyol-derived units as a whole in the polyurethane prepolymer on a weight basis will usually be at least 25 weight %, and usually within the range of 25 to 75 weight % (more usually 30 to 65 weight %).

It will be perceived that in the present invention one could have the following embodiments concerning the interrelationships of the dimer acid-based polyester polyol and the low molecular weight polyol/polyacid components.

In the most preferred of these embodiments the polyester polyol incorporates both dimer acid and cycloaliphatic low molecular weight polyol and/or polyacid, and there is no low molecular weight cycloaliphatic polyol used as such in the prepolymer synthesis. The level of dimer acid in the polyester polyol is usually within the range of from 25 to 75 weight % and the level of low molecular weight cycloaliphatic polyol and/or polyacid is usually in the range of from 15 to 65 weight % and the level of other polyacid and/or polyol components will usually be within the range of 0 to 55 weight %. The polyester polyol as a whole is usually incorporated into the prepolymer at a level of 25 to 75 weight %.

In another embodiment, the polyester polyol incorporates dimer acid but no low molecular weight (<400) cycloaliphatic polyol and/or polyacid, and a low molecular weight cycloaliphatic polyol component is used as such (i.e. as a separate component) in the prepolymer synthesis. The level of dimer acid in the polyester is usually at least 25 weight %, more usually in the range of 25 to 80 weight %, with the level of other (noncycloaliphatic) polyacid and/or polyol components usually being up to 75 weight %, more usually 20 to 75 weight %. The level of polyester polyol as a whole in the prepolymer is usually within the range of from 30 to 68 weight %. The level of low molecular weight cycloaliphatic polyol incorporated as such (i.e. as a separate component) in the prepolymer is usually within the range of 2 to 12 % by weight.

In a further embodiment a combination of the above two embodiments is used, i.e. the polyester polyol incorporates low molecular weight (<400) cycloaliphatic polyol and/or polyacid as well as dimer acid and a separate low molecular cycloaliphatic polyol component is also incorporated into the polyurethane prepolymer.

Overall, the level of dimer acid in the polyurethane prepolymer will usually be in the range of 10 to 50 weight %.

Also overall, the level of low molecular weight (<400) cycloaliphatic polyol(s) and/or polyacid(s) units in the prepolymer will usually be within the range of 2 to 35 weight % (i.e. whether incorporated as part of the polyester polyol and/or, in the case of low molecular weight cycloaliphatic polyol, used as such in the prepolymer synthesis). Any cycloaliphatic polyol(s) used as such (i.e. as a separate component) will usually be within the range of from 0 to 12 weight % of the prepolymer.

The low molecular weight cycloaliphatic polyol (if used) is in particular 1,4-cyclohexane dimethanol, and the low molecular weight cycloaliphatic polyacid (if used) is in particular 1,4-cyclohexane dicarboxylic acid.

Optionally, up to 40 weight % (i.e. 0 to 40 weight %), more preferably up to 30 weight % (0 to 30 weight %), based on the weight of the polyurethane prepolymer reactants, of another type of polyol typically used in polyurethane prepolymer synthesis (i.e. other than a dimer-acid containing polyester polyol as defined above) can be used. Examples include polyether polyols, other types of polyester polyols, polycarbonate polyols, polycaprolactane polyols and the like.

The organic polyisocyanate used in making the prepolymer may be an aliphatic, cycloaliphatic, araliphatic or aromatic polyisocyanate. Examples of suitable polyisocyanates include ethylene diisocyanate, 1,6-hexamethylene diisocyanate, isophorone diisocyanate, tetramethylxylene diisocyanate, 1,4-phenylene diisocyanate, 2,4-toluene diisocyanate, 2,6-toluene diisocyanate, 4,4'-diphenyl-methane diisocyanate and its hydrogenated derivative, 2,4'-diphenylmethane diisocyanate and its hydrogenated derivative, polymethylene polyphenyl polyisocyanates and 1,5-naphthylene diisocyanate. Mixtures of polyisocyanates can be used, particularly isomeric mixtures of the toluene diisocyanates or isomeric mixtures of the diphenylmethane diisocyanates (or their hydrogenated derivatives), and also polyisocyanates which have been modified by the introduction of urethane, allophanate, urea, biuret, carbodiimide, uretonimine or isocyanurate residues. Preferred polyisocyanates are cycloaliphatic polyisocyanates such as 4,4'-dicyclohexylmethane diisocyanate.

The overall level of isocyanate-derived units in the prepolymer will usually be in the range of from 28 to 60 weight %.

In the present invention, monomers providing nonionic and/or ionic dispersing groups, or groups which are converted to such dispersing groups, are included as reactants in the reaction to form the prepolymer so as to provide the facility of self-dispersibility in water of the prepolymer and the final chain-extended polymer.

The ionic dispersing group may be cationic, for example 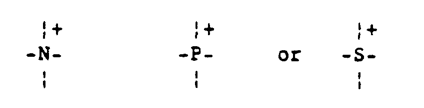 or, more preferably, anionic, for example -SO₃-, -OSO₃-, -PO₂-, and in particular a carboxylate salt group -CO₂-.

Groups which are subsequently converted to dispersing groups are particularly unionised (or substantially unionised) acid or basic groups which can be converted to corresponding anionic or cationic groups by neutralisation or quaternation. For example free (unionised) carboxylic acid groups can be neutralised to carboxylate anionic groups while tertiary amine groups can be quaternised to quaternary ammonium groups.

In general, anionic groups are preferably incorporated in the prepolymer in the form of a low molecular weight polyol or polyamine bearing the appropriate group(s) whilst cationic groups may be conveniently incorporated by means of either a polymeric polyol or a low molecular weight polyol or polyamine bearing the appropriate group(s).

It is most preferred that ionic groups are incorporated into the prepolymer via carboxylic acid groups which are subsequently neutralised to carboxylate ion groups using agents such as a tertiary amine, examples of which include triethylamine, triethanolamine or N-methylmorpholine, or an alkaline hydroxide such as K or Na hydroxide or a quaternary ammonium hydroxide. Examples of reactants for effecting such incorporation include carboxy group-containing diols and triols, and in particular dihydroxy alkanoic acids of the formula. 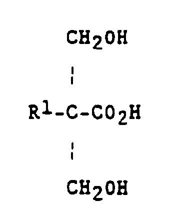 wherein R¹ is hydrogen or alkyl. The preferred carboxy containing diol is 2,2-dimethylol propionic acid.

The conversion of any acid groups present in the prepolymer to anionic salt groups may be effected by neutralising the said acidic groups before, after (if in combination with nonionic stabilisation) or simultaneously with formation of an aqueous dispersion of the prepolymer.

Nonionic dispersing groups are typically pendant polyoxyalkylene groups, particularly polyoxyethylene groups. Such groups may e.g. be provided by employing as a reactant in the prepolymer formation diols having pendant polyoxyethylene chains such as those described in the prior art, for example US 3905929. These diols, because of their function, may (for convenience) be termed dispersing diols. Particularly suitable dispersing diols may be obtained by reacting one mole of an organic diisocyanate in which the two isocyanate groups have different reactivities with approximately one mole of polyethylene glycol mono ether and then reacting the adduct so obtained with approximately one mole of a dialkanolamine, for example diethanolamine.

Nonionic dispersing groups may also be provided by employing as a reactant in the prepolymer formation diisocyanates having pendant polyoxyethylene chains such as those described in the prior art, for example in US 3920598. These diisocyanates, because of their function, may be regarded as dispersing diisocyanates. Particularly suitable dispersing diisocyanates may be obtained by reacting two moles of an organic diisocyanate in which the two isocyanate groups have different reactivities with approximately one mole of polyethylene glycol mono-ether, the initially formed urethane monoisocyanate then reacting at a higher temperature with the excess diisocyanate to form an allophanate diisocyanate having a pendent polyoxyethylene chain.

The polyurethane prepolymer (and final polymer) may of course have a combination of ionic dispersing groups (such as those discussed above) and nonionic dispersing groups (such as those discussed above) which may be introduced into the polyurethane by combining the expedients as exemplified above for the incorporation of such groups.

The pendent dispersing group content of the final polyurethane may vary within wide limits but should be sufficient to provide the polyurethane polymer with the required degree of water-dispersibility. Typically the pendant dispersing group content will vary in the range 10 to 90 milliequivalents (more preferably 18 to 65 milliequivalents) of pendant ionic dispersing groups (particularly carboxylate groups) per 100 g polyurethane polymer and/or 0.5 to 25g of pendent (lateral or terminal) nonionic dispersing groups (particularly polyethylene oxide groups) per 100 g polyurethane polymer.

In terms of weight % of the polyurethane prepolymer the level of reactant(s) units providing nonionic and/or ionic dispersing group(s) is usually within the range of from 2 to 10 weight %.

The isocyanate-terminated polyurethane prepolymer may be prepared in conventional manner by reacting a stoichiometric excess of the organic polyisocyanate(s) with the reactant(s) having a plurality of isocyanate-reactive groups (usually all hydroxy) and any other reactants under substantially anhydrous conditions at a temperature between about 30°C and about 130°C until reaction between the isocyanate groups and the isocyanate-reactive (usually all hydroxyl) groups is substantially complete. During the production of the isocyanate-terminated prepolymer the reactants are generally used in proportions corresponding to a ratio of isocyanate groups to isocyanate-reactive (usually all hydroxyl) groups from about 1.1:1 to about 6:1, preferably from about 1.5:1 to 3:1 (particularly 1.5:1 to 2:1).

If desired, catalysts such as dibutylin dilaurate and stannous octoate may be used to assist prepolymer formation. An organic solvent may optionally be added before, during or after prepolymer formation to control the viscosity. Suitable solvents which may be used include acetone, methylethylketone, dimethylformamide, ethylene carbonate, propylene carbonate, diglyme, N-methylpyrrolidone, ethyl acetate, ethylene and propylene glycol diacetates, alkyl ethers of ethylene and propylene glycol diacetates, alkyl ethers of ethylene and propylene glycol monoacetates, toluene, xylene and sterically hindered alcohols such as t-butanol and diacetone alcohol. The preferred solvents are water-miscible solvents such as N-methylpyrrolidone, dimethyl sulphoxide and dialkyl ethers of glycol acetates or mixtures of N-methylpyrrolidone and methyl ethyl ketone.

The aqueous polyurethane dispersion is preferably prepared by dispersing the isocyanate-terminated polyurethane prepolymer (optionally carried in an organic solvent medium) in an aqueous medium by utilising the self-dispersibility of the prepolymer although free surfactant(s) may additionally be employed if desired, and chain extending the prepolymer with active hydrogen-containing chain extender in the aqueous phase.

The prepolymer may be dispersed in water using techniques well known in the art. Preferably, the prepolymer is added to the water with agitation or, alternatively, water may be stirred into the prepolymer.

The active hydrogen-containing chain extender compound(s) which is reacted with the prepolymer is selected from, a primary or secondary aliphatic, alicyclic, aromatic, araliphatic or heterocyclic diamine or polyamine, or hydrazine or a substituted hydrazine. Water-soluble chain extenders are preferred.

Examples of such chain extenders useful herein include ethylene diamine, diethylene triamine, triethylene tetramine, propylene diamine, butylene diamine, hexamethylene diamine, cyclohexylene diamine, piperazine, 2-methyl piperazine, phenylene diamine, tolylene diamine, xylylene diamine, tris (2-aminoethyl) amine, 3,3-dinitrobenzidine, 4,4'-diaminodiphenylmethane, menthane diamine, m-xylene diamine, isophorone diamine, and adducts of diethylene triamine with acrylate or its hydrolyzed products. Also materials such as hydrazine, azines such as acetone azine, substituted hydrazines such as, for example, dimethyl hydrazine, 1,6-hexamethylene-bis-hydrazine, carbodihydrazine, hydrazides or dicarboxylic acids and sulfonic acids such as adipic acid dihydrazide, oxalic acid dihydrazide, isophthalic acid dihydrazide, hydrazides made by reacting lactones with hydrazine such as gamma-hydroxylbutyric hydrazide, bis-semi-carbazide, and bis-hydrazide carbonic esters of glycols.

The chain extender may be added to the aqueous dispersion of prepolymer or, alternatively, it may already be present in the aqueous medium when the prepolymer is dispersed therein.

The chain extension can be conducted at elevated, reduced or ambient temperatures. Convenient temperatures are from about 5°C to 95°C.

The total amount of chain extender material(s) employed should be approximately equivalent to the free-NCO groups in the prepolymer, the ratio of active hydrogens in the chain extender(s) to NCO groups in the prepolymer being in the range from 0.8:1 to 1.7:1.

[It is evident from the foregoing that the term "polyurethane" as used in this specification is intended to apply not only to polymers (or prepolymers) made by reacting only polyisocyanates and polyols to give urethane linkages, but also to polymers (or prepolymers) made by reacting polyisocyanates with other types of compound, in conjunction with polyols, having other types of isocyanate-reactive groups, thereby to give polymers, prepolymers or polymer segments comprising other types of linkages, for example urea or amide linkages].

In a further useful embodiment of the invention the aqueous polyurethane dispersion of the invention additionally includes at least one other polymer which is not a polyurethane polymer as defined above. This other polymer(s) is preferably also in the form of colloidally dispersed particles in the dispersion, i.e. in the form of an aqueous latex. Preferably this other polymer(s) is or includes an addition homo-or copolymer derived from the addition polymerisation (usually by a free-radical-initiated polymerisation process) of one or more olefinically unsaturated monomers; such a polymer is herein called an "olefinic polymer" for convenience. Particularly preferred olefinic polymers are acrylic polymers (i.e. based predominantly on at least one ester of acrylic or methacrylic acid).

The use of other polymers in the dispersion may allow the performance thereof to be upgraded further if required, depending on the particular polyurethane and other polymer(s). For example, appropriately selected acrylic polymers may allow harder coatings to be made.

The polyurethane polymer(s) and olefinic polymer(s) may be brought together by any suitable technique.

For example, an aqueous dispersion of the polyurethane and an aqueous solution or dispersion of the olefinic polymer (or an organic-solvent solution in a water-miscible solvent), separately prepared, may merely be brought together with agitation.

Another possibility is to perform the preparation of the olefinic polymer in-situ in the presence of a preformed polyurethane aqueous dispersion. In such an embodiment various options are possible. For example, all the olefinically unsaturated monomer(s) for polymerisation may be added to the final, chain-extended polyurethane dispersion and polymerised to make the olefinic polymer (all at once or by feeding at least some of the olefinic monomer(s) to the dispersion during the polymerisation). In an other method, at least some of the olefinic monomer(s) is included in the reaction medium for forming the polyurethane prepolymer, in which case it may possibly provide at least part of a solvent system for the prepolymer reaction (if it possesses suitable solvent characteristics); after the chain-extension step, the olefinic monomer(s) is polymerised to form the olefinic polymer, optionally (but usually) in conjunction with further olefinic monomer(s) for incorporation into the olefinic polymer, such further olefinic monomer(s) being added all at once to the chain-extended polyurethane dispersion before starting olefinic polymerisation, or being all fed during the course of the olefinic polymerisation, or some of the further olefinic monomer(s) being added prior to the start of olefinic polymerisation and some being fed during the course of the polymerisation.

The preferred variant of this last-mentioned embodiment for incorporating olefinic polymer into the polyurethane dispersion may in particular be described in terms of employing the following steps:
- forming a solution of an isocyanate-terminated prepolymer in at least one olefinically unsaturated monomer,
- dispersing the solution in an aqueous medium,
- chain extending the polyurethane, and either
   a) adding further olefinically unsaturated monomer, and initiating olefinic polymerisation, or
   b) initiating olefinic polymerisation and adding olefinically unsaturated further monomer during the olefinic polymerisation.

The polymerisation of the at least one olefinically unsaturated monomer to form the olefinic polymer will normally require the use of an appropriate initiator, and in particular free-radical-yielding initiators are used for this purpose to initiate the olefinic polymerisation. Suitable free-radical-yielding initiators include inorganic peroxides such as K, Na or ammonium persulphate, hydrogen peroxide, or percarbonates; organic peroxides, such as acyl peroxides including e. g. benzoyl peroxide, alkyl hydroperoxides such as t-butyl hydroperoxide and cumene hydroperoxide; dialkyl peroxides such as di-t-butyl peroxide: peroxy esters such as t-butyl perbenzoate and the like; mixtures may also be used. The peroxy compounds are in some cases advantageously used in combination with suitable reducing agents (redox systems) such as Na or K pyrosulphite or bisulphite, and i-ascorbic acid. Azo compounds such as azoisobutyronitrile may also be used. Metal compounds such Fe.EDTA (EDTA is ethylene diamine tetracetic acid) may also be usefully employed as part of the redox initiator system. We particularly prefer, especially when forming the olefinic polymer in-situ, to use an initiator system partitioning between the aqueous and organic phases, e.g. a combination of t-butyl hydroperoxide, i-ascorbic acid and Fe.EDTA. The amount of initiator or initiator system to use is conventional, e.g. within the range 0.05 to 5 wt % based on the total olefinic monomer(s) used.

The olefinic polymerisation will also normally need to be performed in the presence of a stabilising and/or dispersing material. Where an aqueous latex of the olefinic polymer is being formed, a conventional emulsifying agent may be employed (e.g. anionic and/or non-ionic emulsifiers such as Na salts of dialkylsulphosuccinates, Na salts of sulphated oils, Na salts of alkyl sulphonic acids, Na, K and ammonium alkyl sulphates, C₂₂₋₂₄ fatty alcohols, ethyoxylated fatty acids and/or fatty amides, and Na salts of fatty acids such as Na stearate and Na oleate; the amount used is usually 0.1 to 5% by weight on the weight based on the total olefinically unsaturated monomer(s) used). It may be mentioned, however, that in the case of forming the olefinic polymer latex in-situ, the presence of the polyurethane polymer containing anionic and/or nonionic dispersing groups may sometimes remove the requirement for the use of a separately added conventional emulsifying agent since the polyurethane may itself act as an effective dispersant for the olefinic polymerisation, although a conventional emulsifier may be still employed if desired.

Examples of olefinically unsaturated monomers which may be used to form the olefinic polymer include 1,3-butadiene, isoprene, styrene, divinyl benzene, acrylonitrile, methacrylonitrile, vinyl halides such as vinyl chloride, vinyl esters such as vinyl acetate, vinyl propionate, vinyl laurate, and vinyl esters of versatic acid such as VeoVa 9 and VeoVa 10 (VeoVa is a trademark of Shell), heretocyclic vinyl compounds, alkyl esters of mono-olefinically unsaturated dicarboxylic acids (such as di-n-butyl maleate and di-n-butyl fumarate) and, in particular, esters of acrylic acid and methacrylic acid of formula

CH₂-CR²COOR³

wherein R² is H or methyl and R³ is optionally substituted alkyl or cycloalkyl or 1 to 20 carbon atoms (more preferably 1 to 8 carbon atoms) examples of which are methyl acrylate, methyl methacrylate, ethyl acrylate, ethyl methacrylate, n-butyl acrylate, n-butyl methacrylate, 2-ethylhexyl acrylate, 2-ethylhexyl methacrylate, isopropyl acrylate, isopropyl methacrylate, n-propyl acrylate, n-propyl methacrylate, and hydroxylalkyl (meth)acrylates such as hydroxyethyl acrylate, hydroxyethylmethacrylate 2-hydroxylpropyl methacrylate, 2-hydroxypropyl acrylate, and their modified analogues like Tone M-100 (Tone is a trademark of Union Carbide Corporation). Olefinically unsaturated monocarboxylic and/or dicarboxylic acids, such as acrylic acid, methacrylic acid, fumaric acid, and itaconic acid, are other examples which can be mentioned, usually being employed to provide only a small level of copolymerised units in the polymer, and preferably not employed at all unless the stabilisation in the system is wholly nonionic.

The weight ratio of polyurethane polymer(s) to olefinic polymer(s) is suitably in the range of from 99:1 to 20:80, and more preferably 95:5 to 30:70.

It may further be mentioned that the above-described techniques for incorporating olefinic polymers into aqueous polyurethane dispersions are not in themselves new and have e.g. been described in disclosures such as US 3684759, US 3705164, EP 030911 and EP 0308115, reference to which is incorporated herein.

The aqueous dispersions of the invention typically have a solids content of from about 20 to 60% by weight, more usually from 25 to 50% by weight.

The aqueous dispersions of the invention are particularly useful as or for providing the principle component of coating compositions (e.g. protective, decorative or adhesive coating compositions) for which purpose they may be further diluted with water and/or organic solvents, or they may be supplied in more concentrated form by evaporation of water and/or organic components of the liquid medium. As coating compositions, they may be applied to a variety of substrates including wood, metals, stone, concrete, glass, cloth, leather, paper plastics, foam and the like, by any conventional method including brushing, dipping, flow coating, spraying, and the like. The aqueous carrier medium is removed by natural or accelerated (by heat) drying to form a coating. The compositions may contain other conventional ingredients including organic solvents, pigments, dyes, emulsifiers, surfactants, thickeners, heat stabilisers, levelling agents, anti-cratering agents, fillers, sedimentation inhibitors, UV absorbers, antioxidants and the like introduced at any stage of the production process or subsequently. It is possible to include an amount of antimony oxide in the dispersions to enhance the fire retardant properties.

If desired the aqueous dispersion of the invention can be used in combination with other polymer dispersions or solutions which are not according to the invention.

The present invention is now illustrated by reference to the following examples. Unless otherwise specified, all parts, percentages and ratios are on a weight basis.

### Example 1

An aqueous polyurethane polymer dispersion according to the invention was prepared as follows.

A polyurethane prepolymer was first prepared using the following recipe:

| | | % of Prepolymer |
|---|---|---|
| | grams | reactants |
| DESMODUR W* | 414.00 | 46.00 |
| 2,2-dimethylol propionic acid | 50.40 | 5.60 |
| PRIPLAST 3192** | 397.74 | 44.19 |
| 1,4-cyclohexane dimethanol | 37.86 | 4.21 |
| N-methyl pyrollidone | 300.00 | |
| stannous octoate (catalyst) | 0.36 | |

| | | |
|---|---|---|
| * 4,4'-dicyclohexylmethane diisocyanate (commercially available). | | |
| ** a commercially available polyester polyol from Unichema based on a C-36 dimer acid and 1,6-hexanediol. | | |

The above-mentioned ingredients (apart from the stannous octoate) were charged to a reactor and heated, under dry nitrogen, to 50°C. Half of the stannous octoate was added. The reaction mixture was heated to 80-85°C and kept at this temperature for 30 minutes. The remaining half of the stannous octoate was added to the reactor and the reaction mixture was held at 80-85°C for a further 60 minutes. The residual NCO group content was found to be 4.69% (theoretical 5.24%; NCO/OH ratio 1.9).

The reaction mixture was cooled down to 65°C and 32.58 g triethylamine (TEA) was added to neutralise the carboxyl groups.

The resulting prepolymer was dispersed into 999.70 g demineralised water (at 28°C) containing 25.72 g of AKYPOROX OP-250-V nonionic surfactant and 6.17 g of NEOCRYL AP-2860 antifoam. (AKYPOROX and NEOCRYL are registered trade marks). The time to disperse the polymer was 60 to 70 minutes, with the water temperature being kept at 28-32°C.

After having dispersed the prepolymer into the water, a solution containing 33.76 g of 64% hydrazine solution and 40.01g of demineralised water was added to effect chain-extension in the aqueous phase.

The resulting polyurethane polymer dispersion was cooled to 30°C. Then a solution containing 40.01 g demineralised water, 12.60 g of SURFYNOL 104E (2,4,7,9,-tetramethyldecyn(5)4,7 diol), 33.03 g of AEROSOL OT-75 (Na dioctylsulphosuccinate; anionic emulsifier), and 20.42 g N-methylpyrrolidone added over 25-30 minutes. (SURFYNOL and AEROSOL are registered trademarks). 6.17 g of NEOCRYL AP-2860 were added and the mixture stirred for 10 minutes.

### Example 2

An aqueous polyurethane polymer dispersion according to the invention was prepared as follows. A polyurethane prepolymer was first prepared using the following recipe:

| | | % of Prepolymer |
|---|---|---|
| | grams | reactants |
| DESMODUR W | 314.94 | 49.21 |
| 2,2-dimethylol propionic acid | 22.40 | 3.50 |
| PRIPLAST 3192 | 241.76 | 37.78 |
| 1,4-cyclohexane dimethanol | 60.89 | 9.52 |
| N-methyl pyrollidone (NMP) | 160.00 | |
| stannous octoate (catalyst) | 0.40 | |

The above-mentioned ingredients (apart from the stannous octoate) were charged to a reactor and heated, under dry nitrogen, to 60°C. Half the amount of stannous octoate was added. The reaction mixture was heated to 90-92°C and kept at this temperature for 60 minutes. The remaining half of the stannous octoate was added to the reactor, and the reaction mixture was held at 90-92°C for another 60 minutes. The residual NCO group content was found to be 4.96% (theoretical 5.20%; NCO/OH ratio 1.70).

The reaction mixture was cooled down to 65°C and 16.90 g triethylamine was added to neutralise the carboxyl groups.

500 g of the neutralised, NMP - containing prepolymer were dispersed into 673.37 g of demineralised water containing 11.75 g ANTAROX CO-630 (a nonionic emulsifier; ANTAROX is a registered trade mark of Rhone Poulenc). The water temperature was kept below 37°C; the dispersing time was 70 minutes.

A mixture containing 13.50 g of 63.05% hydrazine solution and 10 g water was added to effect chain-extension. The temperature increased spontaneously and the peak temperature was maintained for 10 minutes before cooling. Finally, 11.75 g of NEOCRYL AP-3014 were added to the resulting polyurethane polymer dispersion.

### Example 3

An aqueous polyurethane polymer dispersion according to the invention was prepared as follows. A polyester polyol was synthesised from the following components:

| | % by weight |
|---|---|
| PRIPOL 1009 * | 27 |
| adipic acid | 27 |
| 1,4-cyclohexane dimethanol | 47 |

| | |
|---|---|
| * a C-36 dimer acid (commercially available from Unichema). | |

The polyester polyol had a hydroxyl value of 113 mg KOH/g (theoretical 120) and an acid value of 0.34 mg KOH/g. A polyurethane prepolymer was prepared using the following recipe:

| | | % of Prepolymer |
|---|---|---|
| | grams | reactants |
| DESMODUR W | 242.65 | 37.91 |
| 2,2-dimethylol propionic acid | 22.40 | 3.50 |
| Polyesterpolyol (as above) | 374.95 | 58.59 |
| N-methyl pyrollidone | 160.00 | |
| stannous octoate (catalyst) | 0.40 | |

The above-mentioned ingredients (apart from the stannous octoate) were charged to a reactor and heated, under dry nitrogen, to 60°C. Half of the amount of stannous octoate was added. The reaction mixture was heated to 90-92°C and kept at this temperature for 60 minutes. The remaining half of the stannous octoate was added to the reactor and the reaction mixture held at 90-92°C for another 60 minutes. The residual NCO content was found to be 3.61% (theoretical 4.00; NCO/OH ratio 1.70).

The reaction mixture was cooled to 65°C and 16.90 g triethylamine added.

500 g of the resulting neutralised prepolymer were dispersed into 670.87 g of demineralised water containing 12.14 g ANTAROX CO-630. The water temperature was kept below 37°C; the dispersing time was 105 minutes.

A mixture containing 9.83 g of 63.05% hydrazine solution and 10 g water were added to effect chain-extension. The temperature increased spontaneously and the peak temperature maintained for 30 minutes before cooling. Finally 12.43 g of NEOCRYL AP-3014 were added to the resulting polyurethane polymer dispersion.

### Example 4

An aqueous polyurethane polymer dispersion according to the invention was prepared as follows. A polyester polyol was synthesised from the following components:

| | % by weight |
|---|---|
| PRIPOL 1009 | 68 |
| 1,4-cyclohexane dimethanol | 32 |

The polyester polyol had an hydroxyl value of 116 mg KOH/g (theoretical 120) and an acid value of 0.45 mg KOH/g. A polyurethane prepolymer was prepared using the following recipe:

| | | % of Prepolymer |
|---|---|---|
| | grams | reactants |
| DESMODUR W | 253.30 | 39.36 |
| 2,2-dimethylol propionic acid | 25.60 | 4.00 |
| Polyesterpolyol (as above) | 363.66 | 56.67 |
| N-methyl pyrollidone | 160.00 | |
| stannous octoate (catalyst) | 0.40 | |

The above-mentioned ingredients (apart from the stannous octoate) were charged to a reactor and heated, under dry nitrogen, to 60°C. Half of the amount of stannous octoate was added. The reaction mixture was heated to 90-92°C and kept at this temperature for 60 minutes. The remaining half of the stannous octoate was added to the reactor and the reaction mixture held at 90-92°C for another 60 minutes. The residual NCO content was found to be 3.90% (theoretical 4.21; NCO/OH ratio 1.70).

The reaction mixture was cooled to 65°C and 19.31 g triethylamine added. 550 g of the resulting neutralised prepolymer were dispersed into 735.14 g of demineralised water containing 12.93 g ANTAROX CO-630 and 13.32 g of the NEOCRYL AP-3014. The water temperature was kept below 37°C; the dispersing time was 120 minutes.

A mixture containing 11.64 g of 63.05% hydrazine solution and 10 g water were added to effect chain-extension. The temperature increased spontaneously and the peak temperature maintained for 30 minutes before cooling.

### Example 5

An aqueous dispersion according to the invention incorporating a polyurethane polymer and an in-situ formed olefinic polymer was prepared as follows.

A polyester polyol was synthesised from the following components:

| | % by weight |
|---|---|
| PRIPOL 1009 | 49 |
| adipic acid | 12 |
| 1,4-cyclohexane dimethanol | 39 |

The polyester polyol had a hydroxyl value of 113 mg KOH/g and an acid value of 0.47 g KOH/g. A polyurethane prepolymer was prepared according to the following recipe:

| | | % of Prepolymer |
|---|---|---|
| | grams | reactants |
| DESMODUR W | 508.45 | 42.37 |
| 2,2-dimethylol propionic acid | 42.00 | 3.50 |
| Polyester polyol (as above) | 649.55 | 54.13 |
| N-methyl pyrollidone | 300.00 | |
| stannous octoate (catalyst) | 0.70 | |

The procedure followed to make the prepolymer was substantially as described in Example 2, except that the above ingredients in the amounts specified were employed. The residual NCO group content was found to be 5.01% (theoretical 5.43; NCO/OH ratio 2.0). The amount of triethylamine used to neutralise the carboxyl groups was 31.68 g.

600 g of the neutralised prepolymer were dispersed into 811.38 g of demineralised water, containing 14.67 g ANTAROX CO-630. The water temperature was kept below 37°C; the dispersing time was 60 minutes.

To this dispersion was added a mixture of 16.11 g of 64.05 % hydrazine solution and 10 g of water. The temperature increased spontaneously and the peak temperature was maintained for 10 minutes. Finally 14.67 g of the antifoam AP-3014 were added to the resulting polyurethane polymer dispersion.

The incorporation of an in-situ polymerised olefinic polymer (in fact an acrylic polymer) was effected using the following recipe.

| | | grams |
|---|---|---|
| 1. | polyurethane dispersion (as above) | 355.7 |
| 2. | water (demineralised) | 115.63 |
| 3. | n-butyl acrylate (BA) | 22.87 |
| 4. | methyl methacrylate (MMA) | 81.62 |
| 5. | n-butyl methacrylate (BMA) | 9.88 |
| 6. | N,N-dimethylethanolamine (DMEA) | 0.11 |
| 7. | t-butyl hydroperoxide (3.5% in demin. water) | 6.27 |
| 8. | i-ascorbic acid (1% in demin. water) | 7.09 |
| 9. | Fe EDTA (1% in demin. water) | 1.21 |
| 10. | t-butyl hydroperoxide (3.5% in demin. water) | 28.43 |
| 11. | i-ascorbic acid (1% in demin. water) | 28.60 |
| 12. | t-butyl hydroperoxide (3.5% in demin. water) | 0.28 |
| 13. | i-ascorbic acid | 0.27 |
| 14. | Fe EDTA (1% in demin. water) | 0.07 |

The polyurethane dispersion (1) was diluted with the demineralised water (2). 20% (w/w) of 3 to 6 were added and the mixture heated to 35°C and kept at this temperature for 1 hour. 7 was added followed by 8 and 9. The temperature rose to about 40°C. The peak temperature was maintained for 15 minutes and 10 was added. The batch was then heated to 50°C and a feed of the remaining 80% of 3 to 6 begun. A feed of 11 was also begun. The batch was heated to 65°C (reaction temperature) while feeding. The total feed time for 3 to 6 was 60 minutes. The feed time for 11 was 70 minutes. 12, 13, and 14 were added. The batch was kept at 65°C for 30 minutes and then cooled to yield the aqueous polyurethane polymer / acrylic polymer dispersion.

The monomers were added in a ratio of BA/MMA/BMA 20/71.4/8.6 to give an acrylic polymer glass transition temperature (Tg) of 50°C (as calculated from the Fox equation). The ratio of polyurethane polymer / acrylic polymer is 50/50.

### Example 6

An aqueous dispersion according to the invention incorporating a polyurethane polymer and a in-situ formed olefinic polymer was prepared as follows:

The polyurethane polymer dispersion was prepared according to the following recipe:

| | | % of Prepolymer |
|---|---|---|
| | grams | reactants |
| DESMODUR W | 300.72 | 53.70 |
| 2,2-dimethylol, propionic acid | 19.6 | 3.50 |
| PRIPLAST 3192 | 191.44 | 34.19 |
| 1,4-cyclohexane dimethanol | 48.24 | 8.61 |
| N-methyl pyrollidone | 140.00 | |
| stannous octoate (catalyst) | 0.30 | |

The procedure followed to make the prepolymer was substantially as described in Example 2, except that the above ingredients in the amounts specified were employed. The residual NCO group content was found to be 6.68% (theoretical 6.89; NCO/OH ratio 2.0). The amount of triethylamine used to neutralise the carboxyl groups was 14.79 g.

600 g of the neutralised prepolymer were dispersed into 815.77 g of demineralised water, containing 14.57 g ANTAROX CO-630. The water temperature was kept below 37°C; the dispersing time was 75 minutes.

To this dispersion was added a mixture of 21.67 g of 63.48 % hydrazine solution and 10 g of water. The temperature increased spontaneously and the peak temperature was maintained for 10 minutes. Finally 14.81 g of NEOCRYL AP-3014 were added to the resulting polyurethane polymer dispersion.

The incorporation of an in-situ polymerised olefinic polymer (in fact an acrylic polymer) was effected using the following recipe:

| | | grams |
|---|---|---|
| 1. | polyurethane dispersion (as above) | 600.00 |
| 2. | water (demineralised) | 202.77 |
| 3. | n-butyl acrylate (BA) | 38.95 |
| 4. | methyl methacrylate (MMA) | 138.98 |
| 5. | n-butyl methacrylate (BMA) | 16.83 |
| 6. | N,N-dimethylethanolamine (DMEA) | 0.18 |
| 7. | t-butyl hydroperoxide (3.5% in demin. water) | 10.68 |
| 8. | i-ascorbic acid (1% in demin. water) | 12.07 |
| 9. | Fe EDTA (1% in demin. water) | 2.07 |
| 10. | t-butyl hydroperoxide (3.5% in demin. water) | 48.41 |
| 11. | i-ascorbic acid (1% in demin. water) | 48.69 |
| 12. | t-butyl hydroperoxide (3.5% in demin. water) | 0.47 |
| 13. | i-ascorbic acid | 0.47 |
| 14. | Fe EDTA (1% in demin. water) | 0.12 |

The polyurethane dispersion (1) was diluted with the demineralised water (2). 20% (w/w) of 3 to 6 were added and the mixture heated to 35°C and kept at this temperature for 1 hour. 7 was added followed by 8 and 9. The temperature rose to about 40°C. The peak temperature was maintained for 15 minutes and 10 was added. The batch was then heated to 50°C and a feed of the remaining 80% of 3 to 6 begun. A feed of 11 was also begun. The batch was heated to 65°C (reaction temperature) while feeding. The total feed time for 3 to 6 was 60 minutes. The feed time for 11 was 70 minutes. 12, 13, and 14 were added. The batch was kept at 65°C for 30 minutes and then cooled to yield the aqueous polyurethane polymer / acrylic polymer dispersion.

The monomers were added in a ratio of BA/MMA/BMA 20/71.4/8.6 to give an acrylic polymer glass transition temperature (Tg) of 25°C (as calculated from the Fox equation). The ratio of polyurethane polymer / acrylic polymer is 50/50.

### Example 7

An aqueous dispersion according to the invention incorporating a polyurethane polymer and a in-situ formed olefinic polymer was prepared as follows:

A polyester polyol was synthesised from the following components.

| | % by weight |
|---|---|
| PRIPOL 1004 * | 52.4 |
| adipic acid | 11.1 |
| 1,4-cyclohexane dimethanol | 36.5 |

| | |
|---|---|
| * a C-44 dimer acid (commercially available from Unichema). | |

The polyester polyol had a hydroxyl value of 110 mg KOH/g and an acid value of 0.2 mg KOH/g. A polyurethane prepolymer was prepared according to the following recipe:

| | | % of Prepolymer |
|---|---|---|
| | grams | reactants |
| DESMODUR W | 267.68 | 41.82 |
| 2,2-dimethylol propionic acid | 22.40 | 3.50 |
| Polyester polyol (as above) | 349.92 | 54.13 |
| mixture of BA/MMA/BMA monomers in | 160.00 | |
| wt. ratio 20.00/37.51/42.49 | | |
| stannous octoate (catalyst) | 0.40 | |

The procedure followed to make the prepolymer was substantially as described in Example 2, except that the above ingredients in the amounts specified were employed. (In particular, it will be noted that an acrylic monomer mixture BA/MMA/BMA was used in place of N-methylpyrrolidone). The residual NCO group content was found to be 5.21% (theoretical 5.39; NCO/OH ratio 2.0). The amount of triethylamine used to neutralise the carboxyl groups was 16.90 g.

600 g of the neutralised prepolymer were dispersed into 811.60 g of demineralised water, containing 14.57 g ANTAROX CO-630. The water temperature was kept below 37°C; the dispersing time was 70 minutes.

To this dispersion was added a mixture of 16.91 g of 63.42 % hydrazine solution and 10 g of water. The temperature increased spontaneously and the peak temperature was maintained for 10 minutes. Finally 14.67 g of NEOCRYL AP-3014 were added to the resulting polyurethane polymer dispersion.

The incorporation of an in-situ polymerised olefinic polymer (in fact an acrylic polymer) was effected using the following recipe:

| | | grams |
|---|---|---|
| 1. | polyurethane dispersion (as above) | 700.00 |
| 2. | water (demineralised) | 320.47 |
| 3. | n-butyl acrylate (BA) | 34.65 |
| 4. | methyl methacrylate (MMA) | 123.65 |
| 5. | n-butyl methacrylate (BMA) | 14.97 |
| 6. | N,N-dimethylethanolamine (DMEA) | 0.17 |
| 7. | t-butyl hydroperoxide (3.5% in demin. water) | 15.37 |
| 8. | i-ascorbic acid (1% in demin. water) | 17.38 |
| 9. | Fe EDTA (1% in demin. water) | 2.98 |
| 10. | t-butyl hydroperoxide (3.5% in demin. water) | 57.00 |
| 11. | i-ascorbic acid (1% in demin. water) | 57.33 |
| 12. | t-butyl hydroperoxide (3.5% in demin. water) | 0.56 |
| 13. | i-ascorbic acid (1% in demin. water) | 0.55 |
| 14. | Fe EDTA (1% in demin. water) | 0.14 |

The polyurethane dispersion (1) was diluted with the demineralised water (2). The batch was heated to 35°C. 7 was added followed by 8 and 9. The temperature rose to about 40°C. The peak temperature was maintained for 15 minutes and 10 was added. The batch was then heated to 50°C and a feed of 3 to 6 begun. A feed of 11 was also begun. The batch was heated to 65°C (reaction temperature) while feeding. The total feed time for 3 to 6 was 60 minutes. The feed time for 11 was 70 minutes. 12, 13, and 14 were added. The batch was kept at 65°C for 30 minutes and then cooled to yield the aqueous polyurethane polymer / acrylic polymer dispersion.

The monomers were added in a ratio of BA/MMA/BMA 20/71.4/8.6 to give an acrylic polymer glass transition temperature (Tg) of 50°C (as calculated from the Fox equation). The ratio of polyurethane polymer / acrylic polymer is 50/50.

### Performance of Dispersions

The dispersions made as described above were evaluated using a variety of test procedures.

### Double Rub Tests (Solvent Resistance)

The double rub resistances were measured as follows. An 80-100 µm wet film coating is cast on a glass plate and the coating is subsequently dried for 16-18 hours at 52°C. After cooling to room temperature the coating is rubbed to and fro (double rubs) with a rag soaked in solvent (ethanol EtOH or methyl ethyl ketone MEK) until the film fails (i.e. the substrate is showing through), the result being quoted as the number of double rubs to effect this. A maximum of 200 double rubs are performed and if the substrates still not showing though, the result is rated as follows:

| | |
|---|---|
| 200 (0/5) | film failed |
| 200 (1/5) | film is severely affected |
| 200 (2/5) | film is affected |
| 200 (3/5) | film is slightly affected |
| 200 (4/5) | film is hardly affected |
| 200 (5/5) | film is unaffected |

### Spot Tests (resistance to solvents and other liquids)

These were measured as follows. A 100 µm wet film is applied onto a Leneta Opacity test chart (form 2C-available from the Leneta Company, USA) and dried for 20 minutes at room temperature. The test chart is placed in an oven at 52°C for 64 hours. The test chart is conditioned at room temperature for 8 hours. The test liquids are placed on the coated test chart for 16 hours. The spots are removed and the film underneath assessed. A rating of 0 means that the film is severely damaged by the test liquid; 5 means that the film is not affected at all. The film appearance is assessed twice: first immediately after the test liquid is removed (b), secondly after four hours of recovery (a).

The liquids used for testing were water, ethanol (EtOH), coffee, "Andy" (a commonly-used liquid detergent in Holland). A "hot pan" spot test was also used in which demineralised water is placed on the coating and immediately afterwards a beaker with hot water (100°C) is placed on the water spot. The beaker is removed after the water has cooled down to ambient temperature.

### Marking Tests

Coatings are made as for the spot tests. The coated test chart is marked with a felt pen, a ballpoint pen, shoe polish or lipstick. Removal of the mark is attempted using a rag soaked in EtOH. A rating of 0 means that the film is severely damaged or stained (i.e. the mark is not easy to remove); 5 means that the film is unaffected (i.e. the mark is easy to remove and causes no staining or damage). As with the spot tests, the film appearances is assessed immediately after the attempt to remove the mark (b), and four hours after the attempt to remove the mark (a).

The results are shown in the following tables 1, 2 and 3.

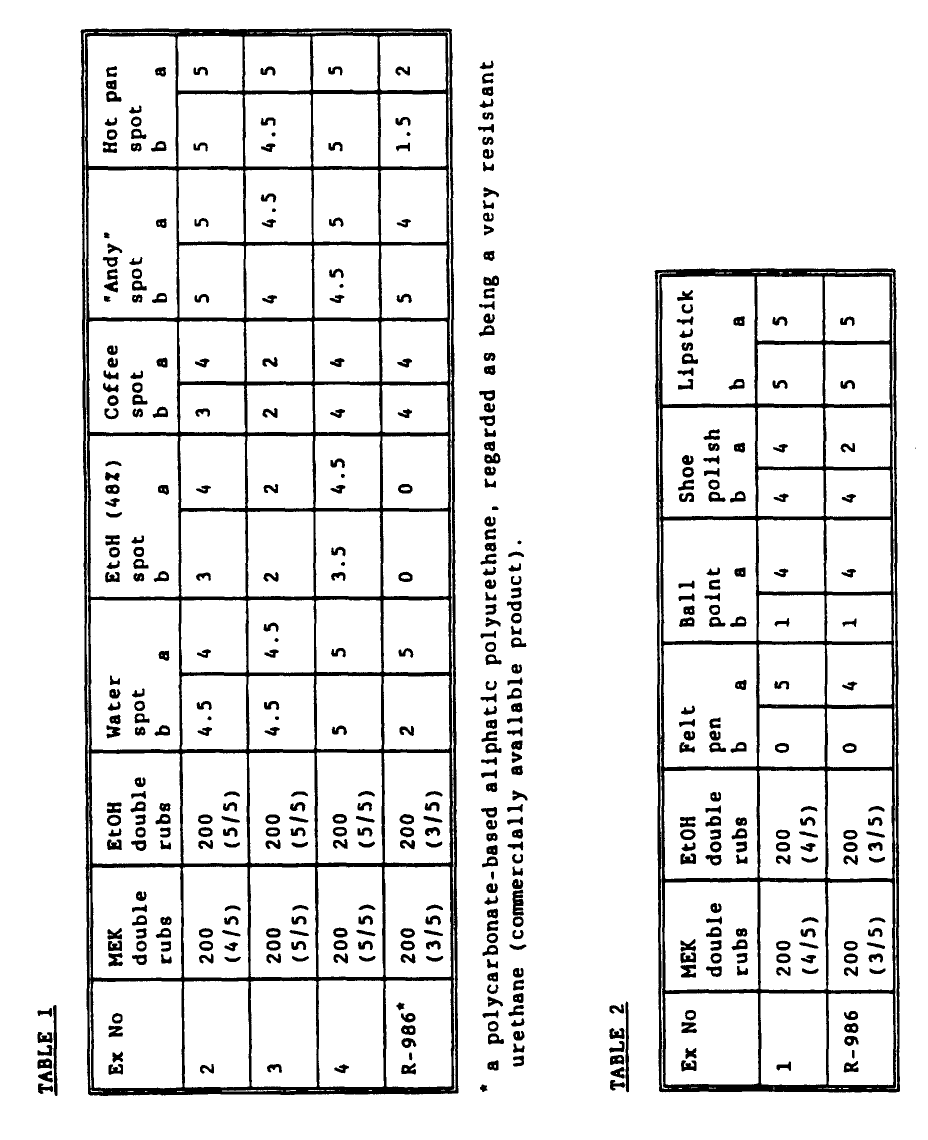

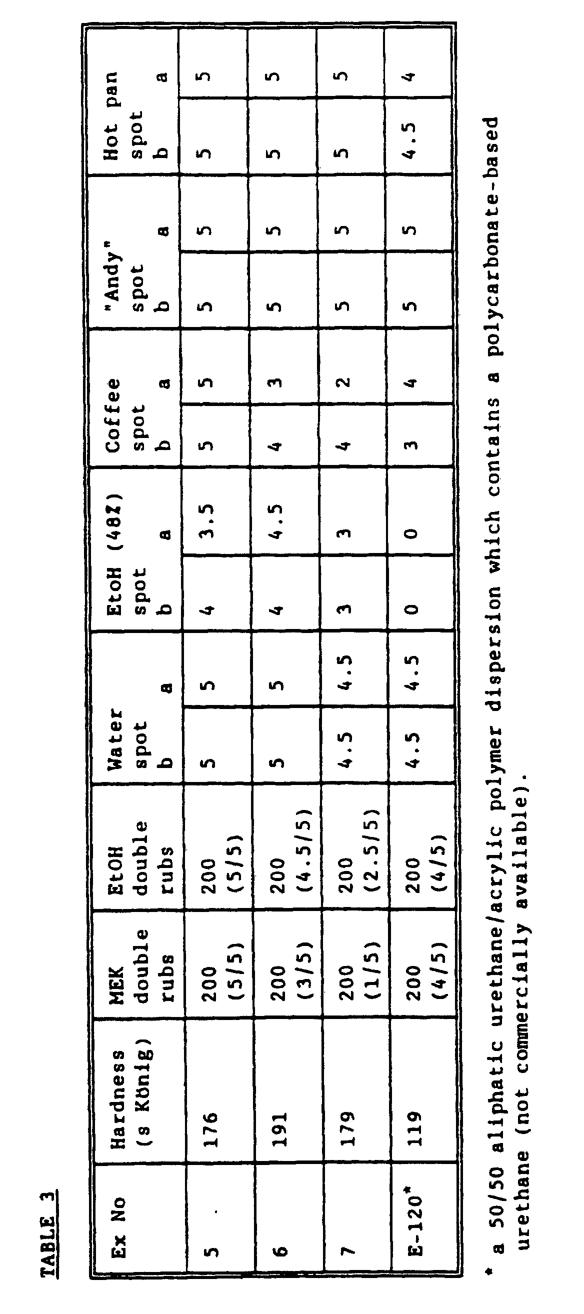

It is seen that the dispersions of the invention are generally comparable in performance to the polycarbonate-based products, and in some cases have superior performance.

### Example 8

An aqueous dispersion according to the invention incorporating a polyurethane polymer and an in-situ formed olefinic polymer was prepared as follows.

A polyester polyol was synthesised from the following components.

| | % by weight |
|---|---|
| PRIPOL 1004 | 52.4 |
| adipic acid | 11.1 |
| 1,4-cyclohexane dimethanol | 36.5 |

The polyester polyol had a hydroxyl value of 116.16 mg KOH/g and an acid value of 0.4 mg KOH/g. A polurethane prepolymer was prepared according to the following recipe:

| | grams | % of prepolymer |
|---|---|---|
| | | reactants |
| Desmodur W | 306.43 | 45.06 |
| 2,2-dimethylol propionic acid | 30.6 | 4.50 |
| polyester polyol (as above) | 342.97 | 50.44 |
| mixture of BA/MMA/BMA monomers in | 170.00 | |
| wt. ratio 20/71.4/8.6 | | |
| stannous octoate (catalyst) | 0.40 | |

The procedure followed to make the prepolymer was substantially as described in Example 2, except that the above ingredients in the amounts specified were employed. The acrylic monomers were stabilised with 0.1% by weight of lonol CP. The residual NCO group content was found to be 5.75% (theoretical 5.78%; NCO/OH ratio 2.0). The amount of triethylamine used to neutralise the carboxyl groups was 23.09 g.

750 g of the neutralised prepolymer were dispersed into 979.96 g of demineralised water, containing 18.11 g ANTAROX CO-630 and 18.1 g NeoCryl AP-3014. The water temperature was kept below 35°C; the dispersing time was 50 minutes.

To this dispersion was added a mixture of 23.3 g of 63.2% hydrazine solution and 25 grams of water. The temperature increased spontaneously and the peak temperature was maintained for 10 minutes. Finally 113.4 g of demineralised water were added to the dispersion.

The incorporation of an in-situ polymerised olefinic polymer (in fact an acrylic polymer) was effected using the following recipe:

| | | grams |
|---|---|---|
| 1. | polyurethane dispersion (as above) | 500.00 |
| 2. | water (demineralised) | 51.04 |
| 3. | BA | 5.73 |
| 4. | MMA | 20.45 |
| 5. | BMA | 2.48 |
| 6. | DMEA | 0.07 |
| 7. | t-butyl hydroperoxide (3.5% in demin. water) | 10.4 |
| 8. | i-ascorbic acid (1% in demin. water) | 11.75 |
| 9. | Fe EDTA (1% in demin. water) | 2.01 |
| 10. | t-butyl hydroperoxide (3.5% in demin. water) | 16.54 |
| 11. | i-ascorbic acid (1% in demin. water) | 16.64 |
| 12. | t-butyl hydroperoxide (3.5% in demin. water) | 0.16 |
| 13. | i-ascorbic acid (1% in demin. water) | 0.16 |
| 14. | Fe EDTA (1% in demin. water) | 0.04 |

The polyurethane dispersion (1) was diluted with the demineralised water (2). The batch was heated to 35°C. 7 was added followed by 8 and 9. The temperature rose to about 47°C. The peak temperature was maintained for 15 minutes and 10 was added. The batch was then heated to 50°C and a feed of 3 to 6 begun. A feed of 11 was also begun. The batch was heated to 65°C (reaction temperature) while feeding. The total feed time for 3 to 6 was 60 minutes. The feed time for 11 was 70 minutes. 12, 13 and 14 were added. The batch was kept at 65°C for 30 minutes and then cooled to yield the aqueous polyurethane polymer/acrylic polymer dispersion.

The monomers were added in a ratio of BA/MMA/BMA 20/71.4/8.6 to give an acrylic polymer glass transition temperature (Tg) of 50°C (as calculated from the Fox equation). The ratio of polyurethane polymer/acrylic polymer is 70/30.

### Example 9

An aqueous dispersion according to the invention incorporating a polyurethane polymer and an in-situ formed olefinic polymer was prepared as follows.

The same aqueous polyurethane dispersion as prepared in Example 8 (i.e. before incorporation of the olefinic polymer) was used in this example.

The incorporation of an in-situ polymerised olefinic polymer (in fact an acrylic polymer) was effected using the following recipe:

| | | Grams |
|---|---|---|
| 1. | polyurethane dispersion (as above) | 500.00 |
| 2. | water (demineralised) | 173.89 |
| 3. | BA | 23.48 |
| 4. | MMA | 83.78 |
| 5. | BMA | 10.14 |
| 6. | DMEA | 0.16 |
| 7. | t-butyl hydroperoxide (3.5% in demin. water) | 10.4 |
| 8. | i-ascorbic acid (1% in demin. water) | 11.75 |
| 9. | Fe EDTA (1% in demin. water) | 2.01 |
| 10. | t-butyl hydroperoxide (3.5% in demin. water) | 38.6 |
| 11. | i-ascorbic acid (1% in demin. water) | 38.83 |
| 12. | t-butyl hydroperoxide (3.5% in demin. water) | 0.38 |
| 13. | i-ascorbic acid (1% in demin. water) | 0.37 |
| 14. | Fe EDTA (1% in demin. water) | 0.09 |

The polyurethane dispersion (1) was diluted with the demineralised water (2). The batch was heated to 35°C. 7 was added followed by 8 and 9. The temperature rose to about 45°C. The peak temperature was maintained for 15 minutes and 10 was added. The batch was then heated to 50°C and a feed of 3 to 6 begun. A feed of 11 was also begun. The batch was heated to 65°C (reaction temperature) while feeding. The total feed time for 3 to 6 was 60 minutes. The feed time for 11 was 70 minutes. 12, 13 and 14 were added. The batch was kept at 65°C for 30 minutes and then cooled to yield the aqueous polyurethane polymer/acrylic polymer dispersion.

The monomers were added in a ratio of BA/MMA/BMA 20/71.4/8.6 to give an acrylic polymer glass transition temperature (Tg) of 50°C (as calculated from the Fox equation). The ratio of polyurethane polymer/acrylic polymer is 50/50.

### Example 10

An aqueous dispersion according to the invention incorporating a polyurethane polymer and an in-situ formed olefinic polymer was prepared as follows.

The same aqueous polyurethane dispersion as prepared in Example 8 (i.e. before incorporation of the olefinic polymer) was used in this example.

The incorporation of an in-situ polymerised olefinic polymer (in fact an acrylic polymer) was effected using the following recipe:

| | | Grams |
|---|---|---|
| 1. | polyurethane dispersion (as above) | 500.00 |
| 2. | water (demineralised) | 439.95 |
| 3. | BA | 64.89 |
| 4. | MMA | 231.55 |
| 5. | BMA | 28.03 |
| 6. | DMEA | 0.36 |
| 7. | t-butyl hydroperoxide (3.5% in demin water) | 19.84 |
| 8. | i-ascorbic acid (1% in demin. water) | 22.42 |
| 9. | Fe EDTA (1% in demin. water) | 3.84 |
| 10. | t-butyl hydroperoxide (3.5% in demin. water) | 90.07 |
| 11. | i-ascorbic acid (1% in demin. water) | 90.59 |
| 12. | t-butyl hydroperoxide (3.5% in dermin. water) | 0.88 |
| 13. | i-ascorbic acid (1% in demin. water) | 0.87 |
| 14. | Fe EDTA (1% in demin. water) | 0.22 |

The polyurethane dispersion (1) was diluted with the demineralised water (2). The batch was heated to 35°C. 9.5% of the neutralised monomers (3-6) were added to the polyurethane dispersion. The batch was kept at 35°C for 30 minutes. 7 was added followed by 8 and 9. The temperature rose to about 47°C. The peak temperature was maintained for 15 minutes and 10 was added. The batch was then heated to 50°C and a feed of 3 to 6 begun. A feed of 11 was also begun. The batch was heated to 65°C (reaction temperature) while feeding. The total feed time for 3 to 6 was 60 minutes. The feed time for 11 was 70 minutes. 12, 13 and 14 were added. The batch was kept at 65°C for 30 minutes and then cooled to yield the aqueous polyurethane polymer/acrylic polymer dispersion.

The monomers were added in a ratio of BA/MMA/BMA 20/71.4/8.6 to give an acrylic polymer glass transition temperature (Tg) of 50°C (as calculated from the Fox equation). The ratio of polyurethane polymer/acrylic polymer is 30/70.

### Performance of Dispersions of Examples 8, 9 and 10

The dispersion of Examples 8, 9 and 10 were evaluated using the Double Rub Test (solvent resistance) as described above and also using the spot Test (resistance to solvents and other liquids), also as described above (except that, prior to conditioning at room temperature for 8 hours, the test chart was placed in an oven at 70°C for 16 hours instead of at 52°C for 64 hours as before).

The results are shown in Table 4.

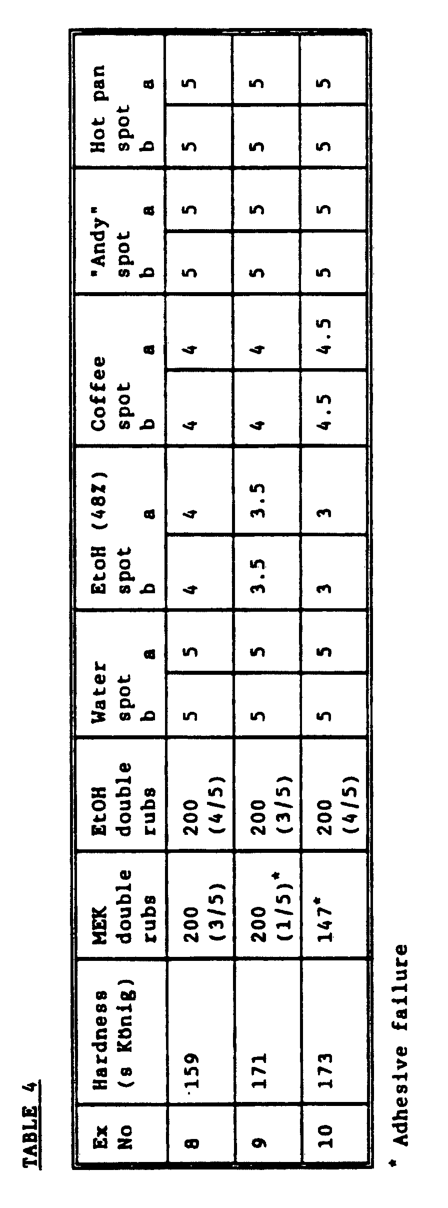

## Claims

1. Aqueous polyurethane polymer(s) dispersion wherein the polyurethane polymer(s) thereof comprises the reaction product of:
(A) an isocyanate-terminated polyurethane prepolymer in the form of an aqueous dispersion thereof, said prepolymer being formed from reactants which comprise:
(i) at least one organic polyisocyanate,
(ii) at least one polyesterpolyol which incorporates polymerised units derived from a dimer acid,
(iii) at least one isocyanate-reactive and/or diisocyanate compound providing nonionic and/or ionic dispersing groups or groups which are subsequently converted to such dispersing groups and wherein,
(iv) said prepolymer also incorporates polymerised units of one or both of at least one cycloaliphatic polyol of molecular weight below 400 and at least one cycloaliphatic, polyacid of molecular weight below 400, with the proviso that any such cycloaliphatic polyol (s) is incorporated by being used as a reactant in the synthesis of the at least one polyesterpolyol and/or by being used as such in the prepolymer synthesis, and that any cycloaliphatic polyacid(s) is incorporated only or substantially only by being used as a reactant in the synthesis of the at least one polyesterpolyol, and
(B) an active hydrogen chain-extending compound(s) selected from a primary or secondary aliphatic, alicyclic, aromatic, araliphatic or heterocyclic diamine of polyamine, or hydrazine or a substituted hydrazine, and which is used in an amount such that the ratio of active hydrogen atoms in the chain-extending compound(s) to isocyanate groups in the isocyanate-terminated prepolymer is in the range of from 0.8:1 to 1.7:1.

2. Aqueous polyurethane polymer(s) dispersion according to claim 1 wherein the polyurethane polymer(s) is in the form of an aqueous latex.

3. Aqueous polyurethane polymer(s) dispersion according to either claim 1 or claim 2 wherein the dimer acid incorporated into the polyesterpolyol has a high degree of hydrogenation corresponding to an iodine value of below 10g I₂/100g for the dimer acid.

4. Aqueous polyurethane polymer(s) dispersion according to any one of the preceding claims wherein the hydroxyl number of the polyesterpolyol is within the range of from 30 to 210 mg KOH/g.

5. Aqueous polyurethane polymer(s) dispersion according to any one of the preceding claims wherein the level of dimer acid-derived units in the polyesterpolyol on a weight % basis is within the range of from 25 to 75 weight %.

6. Aqueous polyurethane polymer(s) dispersion according to any one, of the preceding claims wherein said polyesterpolyol incorporates 0 to 55 weight % of units derived from one or both of said cycloaliphatic polyol of molecular weight below 400 and cycloaliphatic polyacid of molecular weight below 400.

7. Aqueous polyurethane polymer(s) dispersion according to any one of the preceding claims wherein the level of polyesterpolyol-derived units as a whole in the polyurethane prepolymer on a weight basis is within the range of from 25 to 75 weight %.

8. Aqueous polyurethane polymer(s) dispersion according to any one of the preceding claims wherein the polyesterpolyol incorporates dimer acid and one or both of said cycloaliphatic polyol of molecular weight below 400 and cycloaliphatic polyacid of molecular weight below 400, and there is none of said cycloaliphatic polyol used as such in the prepolymer synthesis.

9. Aqueous polyurethane polymer(s) dispersion according to any one of claims 1 to 8 wherein the polyesterpolyol incorporates dimer acid and none of said cycloaliphatic polyol of molecular weight below 400 or cycloaliphatic polyacid of molecular weight below 400, and said cycloaliphatic polyol of molecular weight below 400 is used as such in the prepolymer synthesis.

10. Aqueous polyurethane polymer(s) dispersion according to any one of claims 1 to 8 wherein the polyester polyol incorporates dimer acid and one or both of said cycloaliphatic polyol of molecular weight below 400 and cycloaliphatic polyacid of molecular weight below 400, and said cycloaliphatic polyol of molecular weight below 400 is also used as such the prepolymer synthesis.

11. Aqueous polyurethane polymer(s) dispersion according to any one of the preceding claims wherein the level of dimer acid in the polyurethane prepolymer as a whole is within the range of from 10 to 50 weight %.

12. Aqueous polyurethane polymer(s) dispersion according any one of the preceding claims wherein the level in the polyurethane prepolymer as a whole of units derived from one or both of said cycloaliphatic polyol of molecular weight below 400 and cycloaliphatic polyacid of molecular weight below 400 is within the range of from 2 to 35 weight %.

13. Aqueous polyurethane polymer(s) dispersion according to any one of the preceding claims wherein said cycloaliphatic polyol of molecular weight below 400, if used, is 1,4-cyclohexane dimethanol.

14. Aqueous polyurethane polymer(s) dispersion according to any one of the preceding claims wherein said cycloaliphatic polyacid, if used, is 1,4-cyclohexane dicarboxylic acid.

15. Aqueous polyurethane polymer(s) dispersion according to any one of the preceding claims wherein the level of units derived from organic polyisocyanate in the polyurethane prepolymer is within the range of from 28 to 60 weight %.

16. Aqueous polyurethane polymer(s) dispersion according to any one of the preceding claims wherein the ratio of isocyanate groups to isocyanate-reactive groups in the reactants used to form the polyurethane prepolymer is within the range of from 1.1:1 to 6:1.

17. Aqueous polyurethane polymer(s) dispersion according to any one of the preceding claims wherein said organic polyisocyanate is 4,4' -dicyclohexylmethane diisocyanate.

18. Aqueous polyurethane polymer(s) dispersion according to any one of the preceding claims which includes at least one other polymer which is not a polyurethane polymer as defined in claim 1.

19. Aqueous polyurethane polymer(s) dispersion according to claim 18 wherein said at least one other polymer is or includes an addition polymer derived from the addition polymerisation of one or more olefinically unsaturated monomers.

20. Aqueous polyurethane polymer(s) dispersion according to claim 19 wherein said addition polymer is an acrylic polymer.

21. Aqueous polyurethane polymer(s) dispersion according to either claim 19 or claim 20 wherein said addition polymer has been prepared in-situ in the presence of a preformed aqueous dispersion of said polyurethane polymer(s).

22. Aqueous polyurethane polymer(s) dispersion according to any one of claims 19 to 21 wherein the weight ratio of polyurethane polymer(s) to addition polymer(s) is within the range of from 99:1 to 20:80.

23. Process for the preparation of an aqueous polyurethane polymer dispersion which process comprises:
I synthesising an isocyanate-terminated polyurethane prepolymer from reactants comprising:
(i) at least one organic polyisocyanate,
(ii) at least one polyesterpolyol which incorporates polymerised units derived at least in part from a dimer acid,
(iii)at least one isocyanate-reactive and/or diisocyanate compound providing nonionic and/or ionic dispersing groups or groups which are subsequently converted to such dispersing groups and wherein,
(iv) said prepolymer also incorporates polymerised units of one or both of at least one cycloaliphatic polyol of molecular weight below 400 and at least one cycloaliphatic polyacid of molecular weight below 400 with the proviso that any such cycloaliphatic polyol (s) is incorporated by being used as a reactant in the synthesis of the at least one polyesterpolyol and/or by being used as such in the prepolymer synthesis, and that any such cycloaliphatic polyacid (s) is incorporated only or substantially only by being used as a reactant in the synhesis of the at least one polyesterpolyol,
II forming an aqueous dispersion of said prepolymer having converted to dispersing groups any groups requiring such conversion, and
III chain-extending the prepolymer in the aqueous medium to form said polyurethane polymer dispersion using an active hydrogen chain-extending compound (s) selected from a primary or secondary aliphatic, aromatic, araliphatic or heterocyclic diamine or polyamine, or hydrazine or a substituted hydrazine which is used in an amount such that the ratio of active hydrogen atoms in the chain-extending compound (s) to isocyanate groups in the isocyanate-terminated prepolymer is in the range of from 0.8:1 to 1.7:1.

24. Coating obtainable from an aqueous-based composition comprising an aqueous polyurethane polymer(s) dispersion according to any one of claims 1 to 22.

25. Method of coating a substrate using an aqueous-based composition comprising an aqueous polyurethane polymer (s) dispersion according to any one of claims 1 to 22.

26. Coated substrate having a coating obtainable from an aqueous-based composition comprising an aqueous polyurethane polymer(s) dispersion according to any one of claims 1 to 22.

## Patentansprüche

1. Wäßrige Polyurethan-Polymer(en)dispersion, worin dessen Polyurethan-Polymer(e) das Reaktionsprodukt umfaßt aus:
(A) einem Isocyanat-terminierten Polyurethan-Vorpolymerisat in Form einer wäßrigen Dispersion daraus, wobei das Vorpolymerisat aus Reaktanden gebildet ist, die umfassen:
(i) wenigstens ein organisches Polyisocyanat,
(ii) wenigstens ein Polyesterpolyol, das aus einer Dimersäure stammende polymerisierte Einheiten beinhaltet,
(iii) wenigstens eine Isocyanat-reaktive und/oder Diisocyanat-Verbindung, die nicht-ionische und/oder ionische Dispergiergruppen oder Gruppen, die anschließend zu solchen Dispergiergruppen konvertiert werden, zur Verfügung stellt, und worin,
(iv) das Vorpolymerisat ebenfalls polymerisierte Einheiten eines oder beider aus wenigstens einem cycloaliphatischen Polyol mit einem Molekulargewicht unter 400 und wenigstens einer cycloaliphatischen Polysäure mit einem Molekulargewicht unter 400 beinhaltet, mit der Maßgabe, daß jedes solche cycloaliphatische Polyol durch Verwendung als Reaktand bei der Synthese des wenigstens einen Polyesterpolyols und/oder durch Verwendung als solches bei der Vorpolymerisat-Synthese eingebaut ist, und daß jede cycloaliphatische Polysäure nur oder im wesentlichen nur durch Verwendung als Reaktand bei der Synthese des wenigstens einen Polyesterpolyols eingebaut ist, und
(B) (einer) kettenverlängernden Verbindung(en) mit aktivem Wasserstoff, die aus einem primären oder sekundären aliphatischen, alicyclischen, aromatischen, araliphatischen oder heterocyclischen Diamin oder Polyamin, oder Hydrazin oder einem substituierten Hydrazin ausgewählt sind und die in einer solchen Menge verwendet werden, daß das Verhältnis der aktiven Wasserstoffatome in den kettenverlängernden Verbindungen zu Isocyanat-Gruppen im Isocyanat-terminierten Vorpolymerisat im Bereich von 0,8:1 bis 1,7:1 liegt.

2. Wäßrige Polyurethan-Polymer(en)dispersion gemäß Anspruch 1, worin das (die) Polyurethan-Polymer(e) in Form eines wäßrigen Latex ist (sind).

3. Wäßrige Polyurethan-Polymer(en)dispersion gemäß Anspruch 1 oder 2, worin die im Polyesterpolyol enthaltene Dimersäure einen hohen Hydrierungsgrad besitzt, entsprechend einer Jodzahl von unter 10 g I₂/100 g für die Dimersäure.

4. Wäßrige Polyurethan-Polymer(en)dispersion gemäß einem der vorhergehenden Ansprüche, worin die Hydroxylzahl des Polyesterpolyols im Bereich von 30 bis 210 mg KOH/g ist.

5. Wäßrige Polyurethan-Polymer(en)dispersion gemäß einem der vorhergehenden Ansprüche, worin der Gehalt der aus Dimersäure abgeleiteten Einheiten im Polyesterpolyol innerhalb des Bereichs von 25 bis 75 Gew.-% auf einer Gew.-%-Basis liegt.

6. Wäßrige Polyurethan-Polymer(en)dispersion gemäß einem der vorhergehenden Ansprüche, worin das Polyesterpolyol 0 bis 55 Gew.-% an Einheiten beinhaltet, die aus einem oder beiden des cycloaliphatischen Polyols mit Molekulargewicht unter 400 und der cycloaliphatischen Polysäure mit Molekulargewicht unter 400 stammen.

7. Wäßrige Polyurethan-Polymer(en)dispersion gemäß einem der vorhergehenden Ansprüche, worin der Gehalt der aus Polyesterpolyol abgeleiteten Einheiten als Ganzes im Polyurethan-Vorpolymerisat auf Gewichtsbasis innerhalb des Bereiches von 25 bis 75 Gew.-% liegt.

8. Wäßrige Polyurethan-Polymer(en)dispersion gemäß einem der vorhergehenden Ansprüche, worin das Polyesterpolyol Dimersäure und einen oder beide des cycloaliphatischen Polyols mit Molekulargewicht unter 400 und der cycloaliphatischen Polysäure mit Molekulargewicht unter 400 beinhaltet, und kein cycloaliphatisches Polyol als solches bei der Vorpolymerisat-Synthese verwendet wird.

9. Wäßrige Polyurethan-Polymer(en)dispersion gemäß einem der Ansprüche 1 bis 8, worin das Polyesterpolyol Dimersäure und keinen Vertreter aus cycloaliphatischem Polyol mit Molekulargewicht unter 400 oder cycloaliphatischer Polysäure mit Molekulargewicht unter 400 beinhaltet und das cycloaliphatische Polyol mit Molekulargewicht unter 400 als solches bei der Vorpolymerisat-Synthese verwendet wird.

10. Wäßrige Polyurethan-Polymer(en)dispersion gemäß einem der Ansprüche 1 bis 8, worin das Polyesterpolyol Dimersäure und einen oder beide aus cycloaliphatischem Polyol mit Molekulargewicht unter 400 und cycloaliphatischer Polysäure mit Molekulargewicht unter 400 beinhaltet und das cycloaliphatische Polyol mit Molekulargewicht unter 400 ebenfalls als solches bei der Vorpolymerisat-Synthese verwendet wird.

11. Wäßrige Polyurethan-Polymer(en)dispersion gemäß einem der vorhergehenden Ansprüche, worin die Menge der Dimersäure im Polyurethan-Vorpolymerisat als Ganzes innerhalb des Bereichs von 10 bis 50 Gew.-% liegt.

12. Wäßrige Polyurethan-Polymer(en)dispersion gemäß einem der vorhergehenden Ansprüche, worin die Menge der aus einem oder beiden aus cycloaliphatischem Polyol mit Molekulargewicht unter 400 und cycloaliphatischer Polysäure mit Molekulargewicht unter 400 stammenden Einheiten im Polyurethanvorpolymerisat als Ganzes innerhalb des Bereichs von 2 bis 35 Gew.-% liegt.

13. Wäßrige Polyurethan-Polymer(en)dispersion gemäß einem der vorhergehenden Ansprüche, worin das cycloaliphatische Polyol mit Molekulargewicht unter 400, falls verwendet, 1,4-Cyclohexandimethanol ist.

14. Wäßrige Polyurethan-Polymer(en)dispersion gemäß einem der vorhergehenden Ansprüche, worin die cycloaliphatische Polysäure, falls verwendet, 1,4-Cyclohexandicarbonsäure ist.

15. Wäßrige Polyurethan-Polymer(en)dispersion gemäß einem der vorhergehenden Ansprüche, worin der Anteil der aus organischem Polyisocyanat stammenden Einheiten im Polyurethan-Vorpolymerisat innerhalb des Bereichs von 28 bis 60 Gew.-% liegt.

16. Wäßrige Polyurethan-Polymer(en)dispersion gemäß einem der vorhergehenden Ansprüche, worin das Verhältnis von Isocyanat-Gruppen zu Isocyanat-reaktiven Gruppen in den verwendeten Reaktanden zur Bildung des Polyurethan-Vorpolymerisats innerhalb des Bereichs von 1,1:1 bis 6:1 liegt.

17. Wäßrige Polyurethan-Polymer(en)dispersion gemäß einem der vorhergehenden Ansprüche, worin das organische Polyisocyanat 4,4'-Dicyclohexylmethandiisocyanat ist.

18. Wäßrige Polyurethan-Polymer(en)dispersion gemäß einem der vorhergehenden Ansprüche, die wenigstens ein anderes Polymer einschließt, das nicht ein Polyurethan-Polymer wie in Anspruch 1 definiert ist.

19. Wäßrige Polyurethan-Polymer(en)dispersion gemäß Anspruch 18, worin das wenigstens eine andere Polymer ein Additionspolymer ist oder einschließt, das aus der Additionspolymerisation eines oder mehrerer olefinisch ungesättigter Monomere stammt.

20. Wäßrige Polyurethan-Polymer(en)dispersion gemäß Anspruch 19, worin das Additionspolymer ein Acryl-Polymer ist.

21. Wäßrige Polyurethan-Polymer(en)dispersion gemäß Anspruch 19 oder 20, worin das Additionspolymer in situ in Gegenwart einer vorher gebildeten wäßrigen Dispersion des (der) Polyurethan-Polymer(s/e) hergestellt wurde.

22. Wäßrige Polyurethan-Polymer(en)dispersion gemäß einem der Ansprüche 19 bis 21, worin das Gewichtsverhältnis von Polyurethan-Polymer(e) zu Additionspolymer(e) innerhalb des Bereichs von 99:1 bis 20:80 liegt.

23. Verfahren zur Herstellung einer wäßrigen Polyurethan-Polymerdispersion, wobei das Verfahren umfaßt:
I Synthetisieren eines Isocyanat-terminierten Polyurethan-Vorpolymerisats aus Reaktanden, umfassend:
(i) wenigstens ein organisches Polyisocyanat,
(ii) wenigstens ein Polyesterpolyol, das wenigstens zu einem Teil aus einer Dimersäure abgeleitete polymerisierte Einheiten beinhaltet,
(iii) wenigstens eine Isocyanat-reaktive und/oder Diisocyanat-Verbindung, die nicht-ionische und/oder ionische Dispergiergruppen oder solche Gruppen zur Verfügung stellt, die anschließend zu solchen Dispergiergruppen konvertiert werden, und worin
(vi) das Vorpolymerisat ebenfalls polymerisierte Einheiten aus einem oder beiden aus wenigstens einem cycloaliphatischen Polyol mit Molekulargewicht unter 400 und wenigstens einer cycloaliphatischen Polysäure mit Molekulargewicht unter 400 beinhaltet, mit der Maßgabe, daß jedes solche cycloaliphatische Polyol durch Verwendung als Reaktand bei der Synthese des wenigstens einen Polyesterpolyols und/oder durch Verwendung als solches bei der Vorpolymerisat-Synthese eingebaut ist, und daß jede solche cycloaliphatische Polysäure nur oder im wesentlichen nur durch Verwendung als Reaktand in der Synthese des wenigstens einen Polyesterpolyols eingebaut ist,
II Bilden einer wäßrigen Dispersion des Vorpolymerisats, worin alle Gruppen, die einer solchen Konvertierung bedürfen, zu Dispergiergruppen konvertiert sind, und
III Kettenverlängerung des Vorpolymerisats im wäßrigen Medium zur Bildung der Polyurethan-Polymerdispersion unter Verwendung von (einer) kettenverlängernden Verbindung(en) mit aktivem Wasserstoff, die aus einem primären oder sekundären aliphatischen, aromatischen, araliphatischen oder heterocyclischen Diamin oder Polyamin, oder Hydrazin oder einem substituierten Hydrazin ausgewählt sind und die in einer solchen Menge verwendet werden, daß das Verhältnis von aktiven Wasserstoffatomen in den kettenverlängernden Verbindungen zu Isocyanat-Gruppen im Isocyanat-terminierten Vorpolymerisat im Bereich von 0,8:1 bis 1,7:1 liegt.

24. Beschichtung, erhältlich aus einer Zusammensetzung auf wäßriger Basis, umfassend eine wäßrige Polyurethan-Polymer(en)dispersion gemäß einem der Ansprüche 1 bis 22.

25. Verfahren der Beschichtung eines Substrats unter Verwendung einer Zusammensetzung auf wäßriger Basis, umfassend eine wäßrige Polyurethan-Polymer(en)dispersion gemäß einem der Ansprüche 1 bis 22.

26. Beschichtetes Substrat mit einer Beschichtung, erhältlich aus einer Zusammensetzung auf wäßriger Basis, die eine wäßrige Polyurethan-Polymer(en)dispersion gemäß einem der Ansprüche 1 bis 22 umfaßt.

## Revendications

1. Dispersion aqueuse de polymère(s) de polyuréthane où le polymère(s) de polyuréthane comprend le produit de réaction de :
(A) un prépolymère de polyuréthane isocyanate-terminé sous forme d'une dispersion aqueuse, ledit prépolymère étant formé à partir de réactifs qui comprennent :
(i) au moins un polyisocyanate organique,
(ii) au moins un polyesterpolyol qui comprend des unités polymérisées dérivées d'un acide dimère,
(iii) au moins un composé isocyanate-réactif et/ou diisocyanate fournissant des groupes dispersants non ioniques et/ou ioniques ou des groupes qui sont ensuite convertis en de tels groupes dispersants et où
(iv) ledit prépolymère comprend aussi des unités polymérisées d'une ou deux des substances suivantes : au moins un polyol cycloaliphatique de masse moléculaire inférieure à 400 et au moins un polyacide cycloaliphatique de masse moléculaire inférieure à 400, avec la condition qu'un polyol(s) cycloaliphatique quelconque de ce type soit incorporé en étant utilisé comme réactifs dans la synthèse du ou des polyesterpolyols et/ou en étant utilisé en l'état dans la synthèse du prépolymère, et que tout polyacide(s) cycloaliphatique soit incorporé seulement ou sensiblement seulement en étant utilisé comme réactifs dans la synthèse du ou des polyesterpolyols, et
(B) un composé(s) d'allongement de chaîne à hydrogène actif choisi parmi une diamine ou polyamine primaire ou secondaire, aliphatique, alicyclique, aromatique, arylaliphatique ou hétérocyclique, ou l'hydrazine ou une hydrazine substituée, et qui est utilisé en une quantité telle que le rapport des atomes d'hydrogène actif dans le composé(s) d'allongement de chaîne aux groupes isocyanate dans le prépolymère isocyanate-terminé soit situé dans le domaine de 0,8:1 à 1,7:1.

2. Dispersion aqueuse de polymère(s) de polyuréthane selon la revendication 1 où le polymère(s) de polyuréthane est sous forme d'un latex aqueux.

3. Dispersion aqueuse de polymère(s) de polyuréthane selon la revendication 1 ou la revendication 2 où l'acide dimère incorporé dans le polyesterpolyol a un haut degré d'hydrogénation correspondant à un indice d'iode inférieur à 10 g de I₂/100 g d'acide dimère.

4. Dispersion aqueuse de polymère(s) de polyuréthane selon l'une quelconque des revendications précédentes où l'indice d'hydroxyle du polyesterpolyol est dans le domaine de 30 à 210 mg de KOH/g.

5. Dispersion aqueuse de polymère(s) de polyuréthane selon l'une quelconque des revendications précédentes où le niveau d'unités dérivées d'acide dimère dans le polyesterpolyol sur une base de % en masse est dans le domaine de 25 à 75 % en masse.

6. Dispersion aqueuse de polymère(s) de polyuréthane selon l'une quelconque des revendications précédentes où ledit polyesterpolyol comprend 0 à 55 % en masse d'unités dérivées d'une ou deux substances parmi ledit polyol cycloaliphatique de masse moléculaire inférieure à 400 et ledit polyacide cycloaliphatique de masse moléculaire inférieure à 400.

7. Dispersion aqueuse de polymère(s) de polyuréthane selon l'une quelconque des revendications précédentes où le niveau d'unités dérivées de polyesterpolyol globalement dans le prépolymère de polyuréthane sur une base massique est dans le domaine de 25 à 75 % en masse.

8. Dispersion aqueuse de polymère(s) de polyuréthane selon l'une quelconque des revendications précédentes où le polyesterpolyol comprend un acide dimère et une ou deux substances parmi ledit polyol cycloaliphatique de masse moléculaire inférieure à 400, et ledit polyacide cycloaliphatique de masse moléculaire inférieure à 400, ledit polyol cycloaliphatique n'est pas utilisé en l'état dans la synthèse du prépolymère.

9. Dispersion aqueuse de polymère(s) de polyuréthane selon l'une quelconque des revendications 1 à 8 où le polyesterpolyol comprend un acide dimère et aucune substance parmi ledit polyol cycloaliphatique de masse moléculaire inférieure à 400, ou ledit polyacide cycloaliphatique de masse moléculaire inférieure à 400 et ledit polyol cycloaliphatique de masse moléculaire inférieure à 400 est utilisé en l'état dans la synthèse du prépolymère.

10. Dispersion aqueuse de polymère(s) de polyuréthane selon l'une quelconque des revendications 1 à 8 où le polyesterpolyol comprend un acide dimère et une ou deux substances parmi ledit polyol cycloaliphatique de masse moléculaire inférieure à 400, et ledit polyacide cycloaliphatique de masse moléculaire inférieure à 400 et ledit polyol cycloaliphatique de masse moléculaire inférieure à 400 est utilisé aussi en l'état dans la synthèse du prépolymère.

11. Dispersion aqueuse de polymère(s) de polyuréthane selon l'une quelconque des revendications précédentes où le niveau d'acide dimère dans le prépolymère de polyuréthane globalement est dans le domaine de 10 à 50 % en masse.

12. Dispersion aqueuse de polymère(s) de polyuréthane selon l'une quelconque des revendications précédentes où le niveau dans le prépolymère de polyuréthane globalement d'unités dérivées d'une ou deux substances parmi ledit polyol cycloaliphatique de masse moléculaire inférieure à 400, et ledit polyacide cycloaliphatique de masse moléculaire inférieure à 400 est compris dans le domaine de 2 à 35 % en masse.

13. Dispersion aqueuse de polymère(s) de polyuréthane selon l'une quelconque des revendications précédentes où ledit polyol cycloaliphatique de masse moléculaire inférieure à 400, s'il est utilisé, est le 1,4-cyclohexanediméthanol.

14. Dispersion aqueuse de polymère(s) de polyuréthane selon l'une quelconque des revendications précédentes où ledit polyacide cycloaliphatique, s'il est utilisé, est l'acide 1,4-cyclohexanedicarboxylique.

15. Dispersion aqueuse de polymère(s) de polyuréthane selon l'une quelconque des revendications précédentes où le niveau d'unités dérivées de polyisocyanate organique dans le prépolymère de polyuréthane est dans le domaine de 28 à 60 % en masse.

16. Dispersion aqueuse de polymère(s) de polyuréthane selon l'une quelconque des revendications précédentes où le rapport des groupes isocyanate aux groupes isocyanate-réactifs dans les réactifs utilisés pour former le prépolymère de polyuréthane est dans le domaine de 1,1:1 à 6:1.

17. Dispersion aqueuse de polymère(s) de polyuréthane selon l'une quelconque des revendications précédentes où ledit polyisocyanate organique est le 4,4'-dicyclohexylméthanediisocyanate.

18. Dispersion aqueuse de polymère(s) de polyuréthane selon l'une quelconque des revendications précédentes qui comprend au moins un autre polymère qui n'est pas un polymère de polyuréthane tel que défini dans la revendication 1.

19. Dispersion aqueuse de polymère(s) de polyuréthane selon la revendication 18 où ledit autre polymère est ou comprend un polymère d'addition dérivé de la polymérisation par addition d'un ou plusieurs monomères oléfiniquement insaturés.

20. Dispersion aqueuse de polymère(s) de polyuréthane selon la revendication 19 où ledit polymère d'addition est un polymère acrylique.

21. Dispersion aqueuse de polymère(s) de polyuréthane selon la revendication 19 ou la revendication 20 où ledit polymère d'addition a été préparé in situ en présence d'une dispersion aqueuse préformée dudit polymère(s) de polyuréthane.

22. Dispersion aqueuse de polymère(s) de polyuréthane selon l'une quelconque des revendications 19 à 21 où le rapport massique de polymère(s) de polyuréthane au(x) polymère(s) d'addition est dans le domaine de 99:1 à 20:80.

23. Procédé pour la préparation d'une dispersion aqueuse de polymère de polyuréthane, lequel procédé comprend :
I. la synthèse d'un prépolymère de polyuréthane isocyanate-terminé à partir de réactifs comprenant :
(i) au moins un polyisocyanate organique,
(ii) au moins un polyesterpolyol qui comprend des unités polymérisées dérivées au moins en partie d'un acide dimère,
(iii) au moins un composé isocyanate-réactif et/ou diisocyanate fournissant des groupes dispersants non ioniques et/ou ioniques ou des groupes qui sont ensuite convertis en de tels groupes dispersants et où
(iv) ledit prépolymère comprend aussi des unités polymérisées d'une ou deux substances parmi : au moins un polyol cycloaliphatique de masse moléculaire inférieure à 400 et au moins un polyacide cycloaliphatique de masse moléculaire inférieure à 400, avec la condition qu'un polyol(s) cycloaliphatique de ce type quelconque soit incorporé en étant utilisé comme réactifs dans la synthèse du ou des polyesterpolyols et/ou en étant utilisé en l'état dans la synthèse du prépolymère, et qu'un polyacide(s) cycloaliphatique de ce type quelconque soit incorporé seulement ou sensiblement seulement en étant utilisé comme corps réagissant dans la synthèse du ou des polyesterpolyols,
II. la formation d'une dispersion aqueuse dudit prépolymère avec conversion en groupes dispersants de tous les groupes nécessitant une telle conversion, et
III. l'allongement de chaîne du prépolymère dans le milieu aqueux pour former ladite dispersion de polymère de polyuréthane à l'aide d'un composé(s) d'allongement de chaîne à hydrogène actif choisi parmi une diamine ou polyamine primaire ou secondaire, aliphatique, aromatique, arylaliphatique ou hétérocyclique, ou l'hydrazine ou une hydrazine substituée qui est utilisé en une quantité telle que le rapport des atomes d'hydrogène actif dans le composé(s) d'allongement de chaîne aux groupes isocyanate dans le prépolymère isocyanate-terminé soit dans le domaine de 0,8:1 à 1,7:1.

24. Revêtement qui peut être obtenu à partir d'une composition à base aqueuse comprenant une dispersion aqueuse de polymère(s) de polyuréthane selon l'une quelconque des revendications 1 à 22.

25. Procédé de revêtement d'un substrat utilisant une composition à base aqueuse comprenant une dispersion aqueuse de polymère(s) de polyuréthane selon l'une quelconque des revendications 1 à 22.

26. Substrat revêtu ayant un revêtement qui peut être obtenu à partir d'une composition à base aqueuse comprenant une dispersion aqueuse de polymère(s) de polyuréthane selon l'une quelconque des revendications 1 à 22.
